(19) Europäisches Patentamt
European Patent Office
Office européen des brevets

(11) **EP 4 727 196 A1**

(12) **EUROPEAN PATENT APPLICATION**
published in accordance with Art. 153(4) EPC

(43) Date of publication:
**15.04.2026 Bulletin 2026/16**

(21) Application number: **23948690.5**

(22) Date of filing: **11.08.2023**

(51) International Patent Classification (IPC):
**H04W 24/02** (2009.01)

(52) Cooperative Patent Classification (CPC):
**H04W 24/02**

(86) International application number:
**PCT/CN2023/112484**

(87) International publication number:
**WO 2025/035245 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **WANG, Yu**
**Shenzhen, Guangdong 518129 (CN)**
• **LUO, Hejia**
**Shenzhen, Guangdong 518129 (CN)**
• **WANG, Jun**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD FOR NTN COMMUNICATION, AND COMMUNICATION APPARATUS AND COMMUNICATION SYSTEM**

(57) This application provides an NTN communication method and a communication apparatus. The method includes: A terminal device may determine, within a first hyper cell based on an indication of a first satellite, to perform mobility management within the first hyper cell, or to perform mobility management between the first hyper cell and a second hyper cell. Configuration overheads of a common part for mobility management do not need to be updated in the mobility management within the hyper cell, and some dedicated configuration overheads are saved in the mobility management between the hyper cells. This reduces interruption time caused by the mobility management, and avoids a case in which a complete set of configuration information needs to be updated due to frequent cell handovers, thereby improving handover efficiency, and reducing signaling overheads.

S410: A terminal device receives first information from a first satellite, where the first information includes information for performing mobility management by the terminal device

S420: The terminal device determines, based on the first information, to perform mobility management within a first hyper cell, or to perform mobility management between the first hyper cell and a second hyper cell

FIG. 4

## Description

## TECHNICAL FIELD

This application relates to a satellite network, and more specifically, to an NTN communication method, a communication apparatus, and a communication system.

## BACKGROUND

A non-terrestrial network (non-terrestrial network, NTN) like satellite communication has significant advantages such as global coverage, long-distance transmission, flexible networking, convenient deployment, and no geographical condition limitation, and has been widely applied to a plurality of fields such as maritime communication, positioning and navigation, risk resistance and disaster relief, a scientific experiment, video broadcasting, and earth observation.

In an NTN system, movement of a satellite or movement of a terminal device may trigger mobility management procedures such as a cell handover, cell reselection, a registration update, and a tracking area update. For example, with movement of a network node like a satellite, an uncrewed aerial vehicle, or a high altitude platform, at different moments, the satellite may use different cell sets to cover geographical locations that need to be served by the satellite, to trigger frequent cell changes and mobility management.

In the mobility management procedures in the NTN network, how to reduce interruption time and signaling overheads is an urgent problem to be resolved.

## SUMMARY

This application provides an NTN communication method, a communication apparatus, and a communication system, to reduce interruption time and signaling overheads in mobility management procedures in an NTN network.

According to a first aspect, an NTN communication method is provided. The method may be performed by a terminal apparatus, may be performed by a chip or a circuit disposed in the terminal apparatus, or may be performed by a logical module or software that can implement all or some functions of the terminal apparatus. This is not limited in this application. The following uses a terminal device as an example for description.

The terminal device is located in a first hyper cell, the first hyper cell is associated with a plurality of cells, the terminal device is served by a first cell carried by a first satellite, the first cell includes at least one or more of the plurality of cells.

The hyper cell is associated with a geographical area, different geographical areas correspond to different hyper cells, and the first hyper cell is associated with the plurality of cells. It may be understood as that the geographical area associated with the first hyper cell may be served by the at least one of the plurality of cells associated with the first hyper cell.

The method includes: receiving first information from the first satellite, where the first information includes information for performing mobility management by the terminal device; and determining, based on the first information, whether to perform mobility management within the first hyper cell, or whether to perform mobility management between the first hyper cell and a second hyper cell.

In this application, that the terminal device is located in the first hyper cell may be understood as that the terminal device is in a connected state after initial access, or may mean that the terminal device is disconnected after the initial access and is in an idle state or an inactive state. This is not limited in embodiments of this application.

In this application, the first hyper cell corresponds to a first hyper cell control entity, and the first hyper cell control entity may allocate configuration information to the first hyper cell.

In this application, that the first hyper cell is associated with a plurality of cells may be understood as that the first hyper cell corresponds to a first area, and a terminal device within the first area may be served by the at least one of the plurality of cells.

In this application, the mobility management includes a cell handover, cell reselection, a registration update, a tracking area update, a handover between the hyper cells, a registration request, and the like. This is not limited in embodiments of this application.

In this application, configuration information of a hyper cell may be understood as configuration information of a common part in mobility management configuration information for a plurality of cells associated with the same hyper cell, and configuration information of a cell may be understood as configuration information of a dedicated part in the mobility management configuration information for the cell.

In this technical solution, a two-layer network architecture is provided. One hyper cell is associated with a plurality of cells. The terminal device may determine, within the first hyper cell based on the first information from the first satellite, to perform mobility management within the first hyper cell, or to perform mobility management between the first hyper cell and the second hyper cell. When the terminal device performs mobility management within the hyper cell, the terminal device performs cell handover or reselection, and only needs to update the configuration information corresponding to the cell, and does not need to update the configuration information of the hyper cell, so that some configuration signaling can be saved. When the terminal device performs mobility management between the first hyper cell and the second hyper cell, the terminal device may perform handover or reselection between the hyper cells and the cells. The plurality of cells associated with the hyper cell share a set of configuration information of the hyper cell, and the configuration information of the hyper cell does not need to be configured for each cell, so that some configuration signaling can be saved, and interruption time caused by the mobility management can be reduced, thereby improving handover efficiency.

With reference to the first aspect, in an implementation of the first aspect, the first information includes an indication identifier of a hyper cell, the indication identifier of the hyper cell is associated with at least one cell identifier list, and the cell identifier list includes at least one cell identifier.

In this application, that the indication identifier of the hyper cell is associated with at least one cell identifier list may be understood as that the indication identifier of the hyper cell is associated with one or more cell identifier lists, and the one or more cell identifier lists may be provided by different satellites.

In this technical solution, the first information is the indication identifier of the hyper cell, the indication identifier of the hyper cell may be the same as or different from an identifier of the first hyper cell, and the indication identifier of the hyper cell indicates how the terminal device performs mobility management. The indication identifier of the hyper cell is associated with a cell identifier list provided by one or more different satellites, and indicates a corresponding serving cell.

With reference to the first aspect, in an implementation of the first aspect, based on the first information and one or more of information such as location information, speed information, time information, and signal quality information of the terminal device, whether to perform mobility management within the first hyper cell is determined, or whether to perform mobility management between the first hyper cell and the second hyper cell is determined.

In this technical solution, whether the terminal device needs to perform mobility management can be more accurately determined with reference to the location information, the speed information, the time information, the signal quality information, and the like of the terminal device, thereby improving handover accuracy of terminal device.

With reference to the first aspect, in an implementation of the first aspect, the terminal device is in an idle state or an inactive state; and when the indication identifier of the hyper cell is the same as an identifier of the first hyper cell, determining to perform mobility management within the first hyper cell includes: performing reselection based on the cell identifier list to determine an identifier of a second cell, where the second cell includes at least one of the plurality of cells associated with the first hyper cell; or when the indication identifier of the hyper cell is different from an identifier of the first hyper cell, the indication identifier of the hyper cell indicates the second hyper cell, and determining to perform mobility management between the first hyper cell and the second hyper cell includes: initiating a registration request based on the indication identifier of the hyper cell, where the registration request is used to register with the second hyper cell; and performing reselection based on the cell identifier list to determine an identifier of a second cell, where the second cell includes at least one of a plurality of cells associated with the second hyper cell.

In this technical solution, the terminal device in the idle state or the inactive state determines, based on the indication identifier of the hyper cell, how to perform mobility management. When the indication identifier of the hyper cell is the same as the identifier of the first hyper cell, the terminal device determines to perform mobility management within the first hyper cell, in other words, to perform cell reselection within the first hyper cell based on the cell identifier list associated with the first hyper cell; or when the indication identifier of the hyper cell is different from the identifier of the first hyper cell, the indication identifier of the hyper cell indicates the second hyper cell, and the terminal device determines to perform mobility management between the first hyper cell and the second hyper cell, in other words, to register with the second hyper cell. Therefore, signaling overheads generated in a mobility management process can be saved.

With reference to the first aspect, in an implementation of the first aspect, the terminal device is in a connected state, determining to perform mobility management within the first hyper cell includes: when the indication identifier of the hyper cell is the same as an identifier of the first hyper cell, determining an identifier of a second cell based on the cell identifier list, and performing handover to the second cell, where the second cell includes at least one of the plurality of cells associated with the first hyper cell; or determining to perform mobility management between the first hyper cell and the second hyper cell includes: when the indication identifier of the hyper cell is different from an identifier of the first hyper cell, the indication identifier of the hyper cell indicates the second hyper cell, handover to the second hyper cell is performed based on the indication identifier of the hyper cell, an identifier of a second cell is determined based on the cell identifier list, and handover to the second cell is performed, where the second cell includes at least one of a plurality of cells associated with the second hyper cell.

In this technical solution, the terminal device in the connected state determines, based on the indication identifier of the hyper cell, how to perform mobility management. When the indication identifier of the hyper cell is the same as the identifier of the first hyper cell, the terminal device determines to perform mobility management within the first hyper cell, in other words, to perform cell handover within the first hyper cell based on the cell identifier list associated with the indication identifier of the hyper cell; or when the indication identifier of the hyper cell is different from the identifier of the first hyper cell, the terminal device determines to perform mobility management between the first hyper cell and the second hyper cell, in other words, to hand over to the second hyper cell.

Therefore, mobility interruption time and handover signaling overheads can be reduced.

With reference to the first aspect, in an implementation of the first aspect, when the indication identifier of the hyper cell is the same as the identifier of the first hyper cell, configuration information of the second cell is determined.

In this technical solution, when the indication identifier of the hyper cell is the same as the identifier of the first hyper cell, the terminal device performs mobility management within the first hyper cell. In this application, a plurality of cells associated with one hyper cell use same configuration information of the hyper cell, and configuration information of each cell is provided by a carried satellite. Therefore, when the mobility management is performed within the hyper cell, the configuration information of the cell needs to be updated, but the configuration information of the hyper cell may remain unchanged, so that signaling overheads caused by updating the configuration information of the hyper cell can be saved.

With reference to the first aspect, in an implementation of the first aspect, the configuration information of the second cell is activated, where the second cell is a cell carried by the first satellite; or the configuration information that is of the second cell and that is sent by a second satellite is received, where the second cell is a cell carried by the second satellite.

In this technical solution, the first satellite may preconfigure the configuration information of the second cell for the terminal device, and the terminal device activates the configuration information of the second cell. Alternatively, if a serving satellite of the terminal device changes, and the cell carried by the second satellite provides a service, the configuration information of the second cell may also be received from the second satellite.

With reference to the first aspect, in an implementation of the first aspect, when the indication identifier of the hyper cell is different from the identifier of the first hyper cell, configuration information of the second hyper cell and configuration information of the second cell are determined.

In this technical solution, when performing mobility management, the terminal device needs to update some configuration information and/or configuration information of the cell. If the mobility management is performed between the hyper cells, the configuration information corresponding to the hyper cell needs to be updated, and the configuration information of the cell associated with the new hyper cell needs to be obtained. The configuration information of the common part for the mobility management needs to be updated only once in the mobility management between the hyper cells, and configuration information of a hyper cell no longer needs to be updated for subsequent mobility management within a target hyper cell. This also saves some configuration overheads, thereby reducing signaling overheads.

Further, the configuration information of the hyper cell needs to be updated once only when the mobility management is performed between the hyper cells, and when the mobility management is performed within the hyper cell, only the configuration information corresponding to the target cell needs to be updated. This avoids a case in which a complete set of configuration information needs to be updated due to frequent cell handovers, so that interruption time caused by the mobility management can be reduced, thereby improving handover efficiency.

With reference to the first aspect, in an implementation of the first aspect, the configuration information of the second hyper cell is activated; or the configuration information that is of the second hyper cell and that is sent by a second hyper cell control entity is received, where the second hyper cell control entity is associated with the second hyper cell. The configuration information of the second cell is activated, where the second cell is a cell carried by the first satellite; or the configuration information that is of the second cell and that is sent by a second satellite is received, where the second cell is a cell carried by the second satellite.

In this technical solution, when the mobility management is performed between the first hyper cell and the second hyper cell, the second hyper cell control entity may preconfigure the configuration information of the second hyper cell for the terminal device, or the configuration information of the second hyper cell may be received from the second hyper cell control entity.

With reference to the first aspect, in an implementation of the first aspect, the configuration information of the second hyper cell includes common radio resource control configuration information, and the configuration information of the second cell includes specific radio resource control configuration information of the terminal device.

According to a second aspect, an NTN communication method is provided. The method may be performed by a first satellite, may be performed by a terrestrial station device associated with the first satellite, may be performed by a chip or a circuit disposed in the first satellite, or may be performed by a logical module or software that can implement all or some functions of the first satellite. This is not limited in this application.

In this application, the first satellite serves a first hyper cell, the first hyper cell is associated with a plurality of cells, a first cell carried by the first satellite serves a terminal device located in the first hyper cell, the first cell includes at least one of the plurality of cells, and the first hyper cell is associated with a first area.

The method includes: determining first information, where the first information includes information for performing mobility management by the terminal device; and sending the first information to the terminal device.

With reference to the second aspect, in an implementation of the second aspect, the first information includes an indication identifier of a hyper cell, the indication identifier of the hyper cell is associated with at least one cell identifier list, and the cell identifier list includes at least one cell identifier.

In this technical solution, a two-layer network architecture is provided. One hyper cell is associated with a plurality of cells. The first satellite may send the first information to the served terminal device within the first hyper cell, to indicate the terminal device to determine how to perform mobility management.

According to a third aspect, an NTN communication method is provided. The method may be performed by a first hyper cell control entity, may be performed by a chip or a circuit disposed in the first hyper cell control entity, or may be performed by a logical module or software that can implement all or some functions of the first hyper cell control entity. This is not limited in this application.

In this application, a first hyper cell control entity corresponds to a first hyper cell, the first hyper cell is associated with a plurality of cells, a terminal device is located in the first hyper cell, the terminal device is served by a first cell carried by a first satellite, and the first cell includes at least one of the plurality of cells.

The method includes: determining configuration information of the first hyper cell; and sending the configuration information of the first hyper cell to the terminal device.

In this technical solution, the first hyper cell control entity may configure the configuration information for the terminal device within the first hyper cell, the terminal device within the first hyper cell may perform cell handover, and a set of configuration information of the hyper cell is shared. This avoids a case in which a complete set of configuration information needs to be updated due to frequent cell handovers, thereby improving handover efficiency, and reducing signaling overheads.

According to a fourth aspect, an NTN communication system is provided, including a first satellite and a first hyper cell control entity, where the first hyper cell control entity is associated with a first area, the first area corresponds to a first hyper cell, the first satellite serves the first hyper cell, a terminal device is located in the first hyper cell, the first hyper cell is associated with a plurality of cells, the terminal device is served by a first cell carried by the first satellite, and the first cell includes at least one of the plurality of cells. The first satellite is configured to determine first information, where the first information includes information for performing mobility management by the terminal device. The first satellite is further configured to send the first information to the terminal device. The first hyper cell control entity is configured to send the configuration information of the first hyper cell to the terminal device.

With reference to the fourth aspect, in an implementation of the fourth aspect, the first information includes an indication identifier of a hyper cell, the indication identifier of the hyper cell is associated with at least one cell identifier list, and the cell identifier list includes at least one cell identifier.

With reference to the fourth aspect, in an implementation of the fourth aspect, the first satellite is further configured to send configuration information of a second cell to the terminal device, where the second cell includes a cell indicated by the at least one cell identifier in the cell identifier list, and the second cell is a cell carried by the first satellite.

With reference to the fourth aspect, in an implementation of the fourth aspect, the system further includes a second satellite, and the second satellite is further configured to send configuration information of a second cell to the terminal device, where the second cell is a cell indicated by a cell identifier in one or more cell identifier lists, and the second cell is a cell carried by the second satellite.

With reference to the fourth aspect, in an implementation of the fourth aspect, the indication identifier of the hyper cell indicates a second hyper cell, the system further includes a second hyper cell control entity, and the second hyper cell control entity is configured to send configuration information of the second hyper cell to the terminal device.

With reference to the fourth aspect, in an implementation of the fourth aspect, the configuration information of the second hyper cell includes radio resource control configuration information, and the configuration information of the second cell includes specific radio resource control configuration information of the terminal device.

According to a fifth aspect, an apparatus for NTN communication is provided. The apparatus may be a terminal device, may be a chip or a circuit disposed in the terminal device, or may be a logical module or software that can implement all or some functions of the terminal devices. This is not limited in this application.

The apparatus is located in a first hyper cell, the first hyper cell is associated with a plurality of cells, the terminal device is served by a first cell carried by a first satellite, the first cell includes at least one of the plurality of cells.

The apparatus includes: a transceiver unit, configured to receive first information from the first satellite, where the first information includes information for performing mobility management by the terminal device; and a processing unit, configured to: determine, based on the first information, to perform mobility management within the first hyper cell, or to perform mobility management between the first hyper cell and a second hyper cell, where the second hyper cell is associated with a plurality of cells.

It should be understood that a specific process in which the transceiver unit and the processing unit in the apparatus perform corresponding steps has been described in detail in the first aspect. For beneficial effects of this aspect, refer to the first aspect. For brevity, details are not described herein again.

According to a sixth aspect, an apparatus for NTN communication is provided. The apparatus may be a first satellite, may be a terrestrial station device associated with the first satellite, may be a chip or a circuit disposed in the first satellite, or may be a logical module or software that can implement all or some functions of the first satellites. This is not limited in this application.

The apparatus serves a first hyper cell, the first hyper cell is associated with a plurality of cells, a first cell carried by the first satellite serves a terminal device located in the first hyper cell, the first cell includes at least one of the plurality of cells, and the first hyper cell is associated with a first area.

The apparatus includes: a processing unit, configured to determine first information, where the first information includes information for performing mobility management by the terminal device; and a transceiver unit, configured to send the first information to the terminal device.

It should be understood that a specific process in which the transceiver unit and the processing unit in the apparatus perform corresponding steps has been described in detail in the second aspect. For beneficial effects of this aspect, refer to the second aspect. For brevity, details are not described herein again.

According to a seventh aspect, an apparatus for NTN communication is provided. The apparatus may be a first hyper cell control entity, may be a chip or a circuit configured in the first hyper cell control entity, or may be a logical module or software that can implement all or some functions of the first hyper cell control entities. This is not limited in this application.

The apparatus corresponds to a first hyper cell, the first hyper cell is associated with a plurality of cells, a terminal device is located in the first hyper cell, the terminal device is served by a first cell carried by a first satellite, and the first cell includes at least one of the plurality of cells.

The apparatus includes: a processing unit, configured to determine configuration information of the first hyper cell; and a transceiver unit, configured to send the configuration information of the first hyper cell to the terminal device.

It should be understood that a specific process in which the transceiver unit and the processing unit in the apparatus perform corresponding steps has been described in detail in the third aspect. For beneficial effects of this aspect, refer to the third aspect. For brevity, details are not described herein again.

According to an eighth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, this application provides a communication apparatus. The apparatus includes: a memory, configured to store a program; and at least one processor, configured to execute the computer program or instructions stored in the memory, to perform the method provided in any one of the foregoing aspects or the implementations of the foregoing aspects.

According to a tenth aspect, this application provides a computer-readable storage medium. The computer-readable storage medium stores program code to be executed by a device, and the program code includes the method provided in any one of the foregoing aspects or the implementations of the foregoing aspects.

According to an eleventh aspect, this application provides a computer program product including instructions. When the computer program product runs on a computer, the computer is enabled to perform the method provided in any one of the foregoing aspects or the implementations of the foregoing aspects.

According to a twelfth aspect, this application provides a chip. The chip includes a processor and a communication interface. The processor reads, through the communication interface, instructions stored in a memory, to perform the method provided in any one of the foregoing aspects or the implementations of the foregoing aspects.

Optionally, the processor may be a processing circuit or a logic circuit, and the communication interface may be an input interface or an input interface. The processing circuit or the logic circuit is configured to process information, and the input interface or the output interface is configured to: receive and send information or data.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

**BRIEF DESCRIPTION OF DRAWINGS**

FIG. 1 is a diagram of a communication system 100 to which an embodiment of this application is applicable;
FIG. 2 is a diagram of a network architecture to which an embodiment of this application is applicable;
FIG. 3 is a diagram of a mobility management system architecture to which an embodiment of this application is applicable;

FIG. 4 is a diagram of an NTN communication method to which an embodiment of this application is applicable;

FIG. 5 is a diagram of a mobility management control plane protocol stack architecture to which an embodiment of this application is applicable;

FIG. 6 is a diagram of a mobility management procedure within a hyper cell according to an embodiment of this application;

FIG. 7 is a diagram of a mobility management procedure within a hyper cell that is based on a broadcast signal according to an embodiment of this application;

FIG. 8 is a diagram of a mobility management procedure within a hyper cell that is based on a broadcast signal and conditional handover according to an embodiment of this application;

FIG. 9 is a diagram of a mobility management procedure between hyper cells according to an embodiment of this application;

FIG. 10 is a diagram of a communication apparatus 1000 according to an embodiment of this application; and

FIG. 11 is a diagram of a communication apparatus 1100 according to an embodiment of this application.

## DESCRIPTION OF EMBODIMENTS

The following describes technical solutions in this application with reference to the accompanying drawings.

The technical solutions in this application may be applied to a non-terrestrial network (non-terrestrial network, NTN) system such as a satellite communication system or a high altitude platform station (high altitude platform station, HAPS) communication system, for example, an integrated communication and navigation (integrated communication and navigation, ICaN) system or a global navigation satellite system (global navigation satellite system, GNSS).

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a future mobile communication system, and the like.

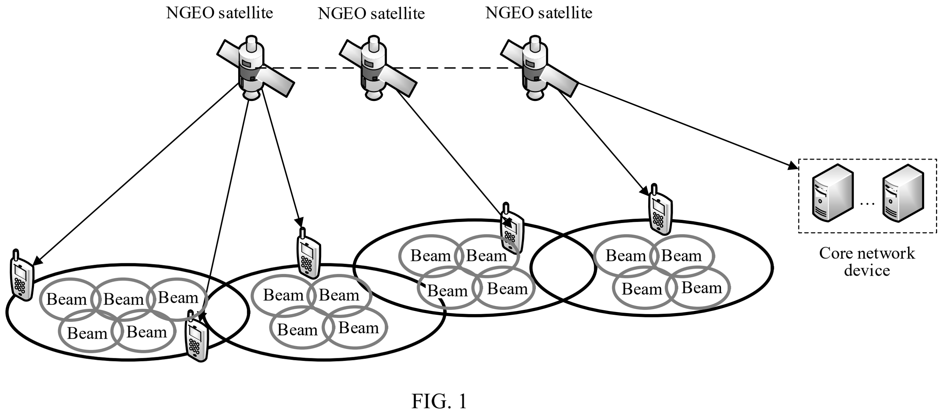

FIG. 1 is a diagram of a communication system 100 to which an embodiment of this application is applicable. As shown in FIG. 1, a satellite provides a communication service for a terminal device by using a plurality of beams. The satellite in this scenario is a non-geostationary earth orbit (non-geostationary earth orbit, NGEO) satellite, and the satellite is connected to a core network device. The satellite uses the plurality of beams to cover a service area, and different beams may perform communication through one or more of time division, frequency division, and space division, or different beams may perform communication in different polarization manners (for example, linear polarization, elliptical polarization, left hand circular polarization, and right hand circular polarization). The satellite provides communication and/or navigation services for the terminal device by broadcasting a communication signal and/or a navigation signal. The satellite mentioned in embodiments of this application may alternatively be a satellite base station or a network side device mounted on a satellite.

The terminal device mentioned in embodiments of this application includes various handheld devices, vehicle-mounted devices, wearable devices, or compute devices that have a wireless communication function, or other processing devices connected to a wireless modem, and may be specifically user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

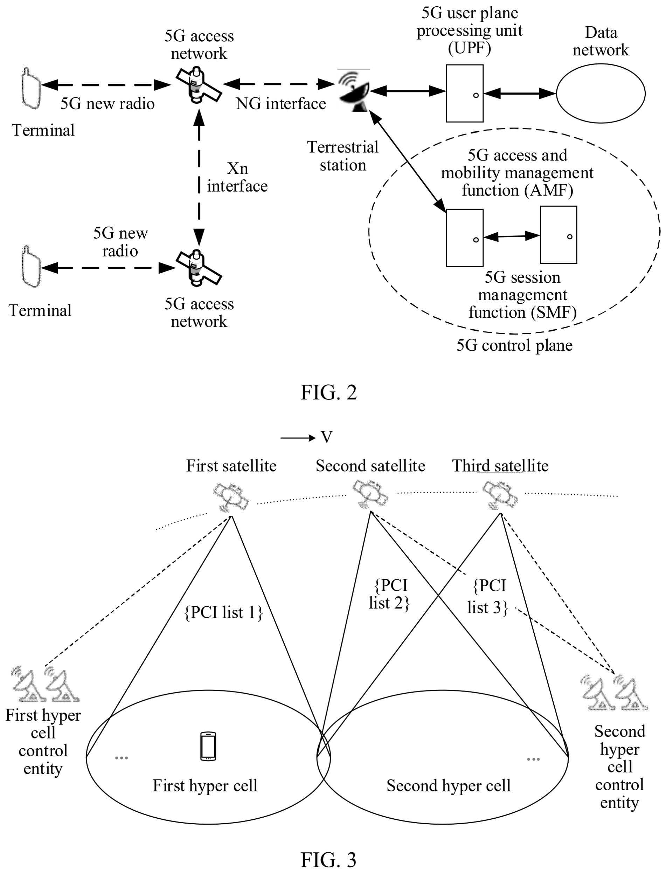

FIG. 2 is a diagram of a network architecture to which an embodiment of this application is applicable. A 5G network is used as an example. A terrestrial mobile terminal UE accesses a network through 5G new radio. A 5G access network device is deployed on a satellite, and is connected to a terrestrial core network through a radio link. In addition, there is an inter-satellite link between satellites, to complete signaling exchange and user data transmission between access network devices. Network elements in FIG. 2 and interfaces of the network elements are described as follows:

Terminal device: a mobile device that supports 5G new radio, where the mobile device is typically a mobile phone, a pad, or the like. The terminal device may access a satellite network through an air interface and initiate a service such as a call or internet access.

5G access network device: mainly provides a radio access service, schedules a radio resource for an access terminal, provides a reliable wireless transmission protocol and data encryption protocol, and the like, and is, for example, a base station.

5G core network: provides services such as user access control, mobility management, session management, user security authentication, and charging. The 5G core network includes a plurality of functional units, and may be divided into a control plane functional entity and a data plane functional entity. An access and mobility management unit (access and mobility management function, AMF) is responsible for user access management, security authentication, and mobility management. A user plane unit (user plane function, UPF) is responsible for managing functions such as user plane data transmission and traffic statistics collection.

Terrestrial station: is responsible for forwarding signaling and service data between a satellite access network device and the 5G core network.

5G new radio: a radio link between the terminal and the access network device.

Xn interface: is an interface between the 5G access network device and the access network device, and is mainly for signaling exchange such as a handover.

NG interface: is an interface between the 5G access network device and the 5G core network, and is mainly for exchanging signaling such as NAS signaling of the core network and service data of a user.

In an NTN system, movement of a satellite or movement of a terminal device may trigger mobility management procedures such as a cell handover, cell reselection, a registration update, and a tracking area update. For example, with movement of a network node like a satellite, an uncrewed aerial vehicle, or a high altitude platform, at different moments, the satellite may use different cell sets to cover geographical locations that need to be served by the satellite, to trigger frequent cell changes and mobility management.

In view of this, this application provides an NTN communication method, to ensure that interruption time can be reduced and signaling overheads can be saved in mobility management procedures in an NTN network.

The following describes the technical solutions in this application.

FIG. 3 is a diagram of a mobility management system architecture according to this application.

The mobility management architecture includes at least one satellite, for example, a first satellite, a second satellite, and a third satellite shown in FIG. 3. Each satellite may carry one or more cells, the one or more cells carried by the satellite can serve a corresponding service area, and the satellite may be used as an anchor for configuration information for a cell in mobility management.

For example, as shown in FIG. 3, the first satellite carries a cell identifier list {PCI list 1}, the second satellite carries a cell identifier list {PCI list 2}, and the third satellite carries a cell identifier list {PCI list 3}. The first satellite can provide configuration information for a cell in {PCI list 1}, the second satellite can provide configuration information for a cell in {PCI list 2}, and the third satellite can provide configuration information for a cell in {PCI list 3}.

It should be noted that {PCI list 1}, {PCI list 2}, and {PCI list 3} may include one or more physical cell identifiers (physical cell ID, PCI). In addition, at different moments and in different geographical areas, cell identifier lists carried by the satellites may be different or may be the same.

In this application, the architecture may further include another satellite node. This application is merely an example for description, and this is not limited.

The mobility management architecture further includes a hyper cell. The hyper cell may be understood as a logical cell including a plurality of cells. The hyper cell in this application is associated with a geographical area, different geographical areas correspond to different hyper cells, and one hyper cell is associated with the plurality of cells. That is, the geographical area associated with the hyper cell may be served by at least one of the plurality of cells associated with the hyper cell. Optionally, a name of the "hyper cell (HyperCell)" is merely an example, and there may be different naming manners. This is not limited in this application.

For example, a first hyper cell and a second hyper cell shown in FIG. 3 respectively correspond to two geographical areas. A geographical area corresponding to one hyper cell may be served by one satellite, or may be served by a plurality of satellites.

For example, the first satellite shown in FIG. 3 can serve the first hyper cell, and the second satellite and the third satellite can serve the second hyper cell. In other words, the cell in the cell identifier list {PCI list 1} carried by the first satellite can serve a terminal device within the first hyper cell, and the cell in the cell identifier list {PCI list 2} carried by the second satellite and the cell in the cell identifier list {PCI list 3} carried by the third satellite can serve a terminal device within the second hyper cell.

For example, a geographical area division manner may be implemented based on an H3 geospatial grid system, or may be implemented in a Fibonacci (Fibonacci) geographic grid division manner. This is not limited in embodiments of this application.

It should be noted that within a cell associated with the hyper cell, a transmission reception point (transmission reception point, TRP) may be further included. For example, within a cell, a plurality of TRPs that provide continuous coverage and work in a same frequency band are included, or the plurality of TRPs that work in the same frequency band and provides the continuous coverage may form a cell.

The mobility management architecture further includes a hyper cell control entity. The hyper cell control entity is a control plane entity corresponding to a hyper cell. The hyper cell control entity may be understood as an anchor for configuring configuration information for the corresponding hyper cell in the mobility management. For example, a first hyper cell control entity shown in FIG. 3 corresponds to a first hyper cell, and the first hyper cell control entity may configure configuration information of the first hyper cell; and a second hyper cell control entity corresponds to a second hyper cell, and the second hyper cell control entity may configure configuration information of the second hyper cell.

In this application, the configuration information of the cell may be understood as configuration information of a dedicated part for the cell in mobility management configuration information, and the configuration information of the hyper cell may be understood as configuration information of a common part for the cell in the mobility management configuration information.

It may be understood that a plurality of cells associated with a same hyper cell use same configuration information of a common part. For example, configuration information of a common part used by the cell in the cell identifier list {PCI list 1} is the configuration information of the first hyper cell, and configuration information of a common part used by the cell in the cell identifier list {PCI list 2} and the cell in the cell identifier list {PCI list 3} is the configuration information of the second hyper cell.

The hyper cell control entity may be carried on a terrestrial station. This is not limited in embodiments of this application.

It may be understood that, in the mobility management architecture, at different moments, a hyper cell identifier and a beam position set (namely, a geographical grid set) covered by the hyper cell usually remain unchanged. In other words, at different moments, a geographical area bound to the hyper cell remains unchanged, an identifier of the hyper cell also remains unchanged, and a covered beam position set also remains unchanged. A service area of a satellite network is divided into a plurality of small geographical areas based on geographical locations, and each geographical area may be understood as a beam position.

It may be understood that, in the mobility management architecture, at different moments, the satellite that provides a bearer for the hyper cell and the cell set carried by the satellite may change. To be specific, as time changes, the satellite moves, and cannot continue to serve the originally served hyper cell, and another satellite takes over a service.

In this application, a terminal apparatus may be located in the geographical area corresponding to the first hyper cell, or may be located in the geographical area corresponding to the second hyper cell after moving. Correspondingly, the satellite that serves the terminal apparatus and the cell set carried by the satellite change.

In this application, the mobility management includes a cell handover, cell reselection, a registration update, a tracking area update, a handover between the hyper cells, a registration request, and the like. This is not limited in embodiments of this application.

The node shown in the mobility management system architecture is merely an example for description. The system architecture may further include another node. This is not limited in embodiments of this application.

In this embodiment of this application, an example in which the terminal apparatus is a terminal device is used.

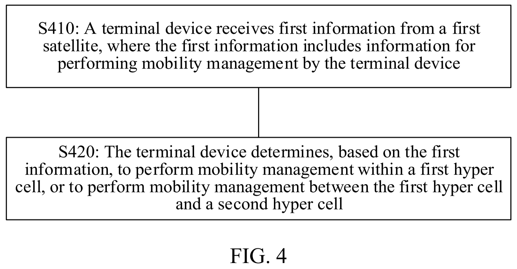

FIG. 4 is a diagram of an NTN communication method according to this application.

In this embodiment, an example in which a terminal device and a network device are used as execution bodies of interaction illustration is used to illustrate the method. However, the execution bodies of the interaction illustration are not limited in this application. For example, the network device in FIG. 4 may alternatively be a chip, a chip system, or a processor that supports the network device in implementing the method, or may be a logical module or software that can implement all or some functions of the network device; and the terminal device in FIG. 4 may alternatively be a chip, a chip system, or a processor that supports the terminal device in implementing the method, or may be a logical module or software that can implement all or some functions of the terminal device.

In this application, the network device may include a hyper cell control entity, a satellite, and an access network device.

In this application, the terminal device is located in a first hyper cell, and the terminal device in the first hyper cell is served by a first cell carried by a first satellite. The first cell may be at least one of a plurality of cells associated with the first hyper cell. The terminal device may be located in the first hyper cell in an initial access state.

When the terminal device is located in the first hyper cell, another optional understanding is that the terminal device obtains or maintains an identifier of the first hyper cell. For example, the terminal device may obtain the identifier of the first hyper cell from a serving satellite, or be preconfigured with the identifier of the first hyper cell by the serving satellite. The serving satellite may be, for example, the first satellite.

For example, when the terminal device accesses the first satellite, an identifier of a hyper cell associated with a current serving cell (the first cell) accessed by the terminal device is the identifier of the first hyper cell. When the terminal device is in an idle state, an identifier of a hyper cell associated with a cell (the first cell) on which the terminal device camps is the identifier of the first hyper cell.

The first cell may be understood as a serving cell of the terminal device or a serving cell group of the terminal device, and the serving cell group includes a plurality of cells that can serve the terminal device.

The first hyper cell is associated with a first area, in other words, the terminal device is located in the first area. The first area may be understood as a geographical area.

That the terminal device is located in the first hyper cell may be understood as that the terminal device is in a connected state after initial access, or may mean that the terminal device is disconnected after the initial access and is in an idle state or an inactive state. This is not limited in embodiments of this application.

In this application, the first hyper cell corresponds to a first hyper cell control entity, to be specific, the first hyper cell control entity may allocate configuration information of the first hyper cell to the first hyper cell.

In this application, configuration information of a hyper cell includes radio resource control configuration information of a common part, and configuration information of a cell includes radio resource control configuration information of a dedicated part for the terminal device.

A plurality of cells associated with a same hyper cell use same configuration information of the hyper cell. In other words, configuration information of a common part used by the plurality of cells associated with the first hyper cell is the same, but configuration information of a dedicated part used by the plurality of cells associated with the first hyper cell may be different.

First, an initial access procedure of the terminal device is described.

The initial access procedure includes the following steps:

a: The terminal device searches for and selects the first cell.

b: The terminal device performs initial access to the first cell.

c: The terminal device establishes radio resource control (radio resource control, RRC) connections to the first cell and the first hyper cell.

d: The terminal device establishes an initial context.

e: Optionally, the terminal device may further establish a protocol data unit (protocol data unit, PDU) session.

In the initial access state, in the foregoing RRC connection establishment process in step c, the first satellite or the first hyper cell control entity may send mobility management-related configuration information to the terminal device.

For example, the mobility management-related configuration information includes one or more of the following information: common measurement configuration information, paging configuration information, hyper cell reference location information, beam position set information, related information about cell access (or access after handover), and the like. This is not limited in embodiments of this application.

Specifically, in the initial access process, the first satellite may configure, for the terminal device, the identifier of the first hyper cell and at least one cell identifier list associated with the first hyper cell, the first satellite may configure configuration information of the first cell for the terminal device, and the first hyper cell control entity may configure the configuration information of the first hyper cell for the terminal device.

It should be understood that, after the initial access, the terminal device determines the identifier of the first hyper cell associated with the current serving cell and the at least one cell identifier list associated with the first hyper cell. The terminal device obtains first information, and determines, based on the first information and the identifier of the first hyper cell, how to perform mobility management.

The non-terrestrial network NTN communication method provided in this application may include the following steps.

S410: The terminal device receives the first information from the first satellite, where the first information includes information for performing mobility management by the terminal device.

In this application, the first satellite sends the first information to the terminal device, and correspondingly, the terminal device receives the first information from the first satellite.

It should be understood that the first satellite is in a moving state, and the first satellite may send the first information when serving the terminal device. In other words, the first satellite is about to leave the first hyper cell, and sends the first information before the terminal device is handed over to a next serving satellite. For example, the terminal device is about to leave coverage of the first satellite, the terminal device may access a second satellite, and the second satellite provides a service. Before the second satellite is accessed, the first satellite sends the first information to the terminal device, to indicate the information about the mobility management.

The first information may include an indication identifier of a hyper cell, and the indication identifier of the hyper cell is associated with one or more cell identifier lists.

That the indication identifier of the hyper cell is associated with one or more cell identifier lists may be understood as that the hyper cell indicated by the indication identifier of the hyper cell may be served by a cell indicated by the associated one or more cell identifier lists, and the one or more cell identifier lists may be provided by different satellites.

The terminal device may receive at least one cell identifier list from the first satellite, where the at least one cell identifier list is associated with the indication identifier of the hyper cell.

It should be understood that the first satellite configures, for the terminal device, the at least one cell identifier list associated with the hyper cell. The at least one cell identifier list may include a cell carried by the first satellite, or may include a cell carried by another satellite.

In other words, the terminal device can be served by different satellites within a same hyper cell, for example, a cell carried by the second satellite and a cell carried by a third satellite shown in FIG. 3 may simultaneously serve the terminal device within a second hyper cell.

The at least one cell identifier list may be sent to the terminal device via the first information, or may be sent to the terminal device via separate information.

S420: The terminal device determines, based on the first information, to perform mobility management within the first hyper cell, or to perform mobility management between the first hyper cell and the second hyper cell.

In this application, performing mobility management within the first hyper cell includes, for example, performing cell reselection or handover within the first hyper cell; and performing mobility management between the first hyper cell and the second hyper cell includes, for example, performing hyper cell registration/-handover and cell reselection and handover.

It should be noted that the mobility management within the first hyper cell may be understood as follows: A location of the terminal device does not change or a moving range of the terminal device is small, and the terminal device is still located within the area corresponding to the first hyper cell. When the terminal device moves and moves to an area corresponding to the second hyper cell, the terminal device may perform mobility management between the first hyper cell and the second hyper cell.

The terminal device determines, based on the first information, to perform mobility management between the first hyper cell and the second hyper cell. The method may include: The terminal device performs mobility management between the first hyper cell and the second hyper cell, and also performs mobility management between the cells; or the terminal device needs to perform mobility management only between the first hyper cell and the second hyper cell, and does not need to perform mobility management between the cells. In this application, the terminal device may be in the idle state or the inactive state, or may be in the connected state. The following describes manners for the terminal device to determine the mobility management in different states.

Case 1: When the terminal device is in the idle state or the inactive state, and the indication identifier of the hyper cell is the same as the identifier of the first hyper cell, the terminal device performs reselection based on the cell identifier list associated with the first hyper cell to determine an identifier of a second cell, where the second cell is at least one of the plurality of cells associated with the first hyper cell.

Case 2: When the terminal device is in the idle state or the inactive state, and the indication identifier of the hyper cell is different from the identifier of the first hyper cell, the indication identifier of the hyper cell indicates the second hyper cell, and the terminal device initiates a registration request based on the indication identifier of the hyper cell, where the registration request is used to register with the second hyper cell.

In this case, when a cell associated with the second hyper cell does not overlap the cell associated with the first hyper cell, reselection is performed based on a cell identifier list associated with the second hyper cell, to determine an identifier of a second cell. When a cell associated with the second hyper cell partially overlaps the cell associated with the first hyper cell, only registration with the second hyper cell may be performed, and cell reselection is not performed. That is, the first cell still serves the terminal device. In other words, the first cell is included in a partially overlapping cell, and can still serve the terminal device.

When the indication identifier of the hyper cell is the same as the identifier of the first hyper cell, the terminal device performs mobility management within the first hyper cell in the idle state or the inactive state, in other words, reselects the second cell within the first hyper cell. It may be understood that the hyper cell of the terminal device does not change, but within the first hyper cell, the serving cell (the first cell) of the terminal device is reselected (to the second cell).

In an optional understanding, when the second cell includes a plurality of cells, the terminal device may select one cell from the plurality of cells for handover when the terminal device enters the connected state.

When the indication identifier of the hyper cell is different from the identifier of the first hyper cell, the terminal device in the idle state or the inactive state needs to perform mobility management between the hyper cells, may initiate the registration request for requesting to register with the second hyper cell, and updates the configuration information of the common part for the cell in mobility management configuration information. When the hyper cell changes, the serving cell (the first cell) of the terminal device may be reselected (to the second cell), and the configuration information of the dedicated part for the cell in the mobility management configuration information also needs to be updated.

Case 3: When the terminal device is in the connected state, and the indication identifier of the hyper cell is the same as the identifier of the first hyper cell, the terminal device determines an identifier of a second cell based on the cell identifier list associated with the first hyper cell, and is handed over to the second cell, where the second cell is at least one of the plurality of cells associated with the first hyper cell.

Case 4: When the terminal device is in the connected state, and the indication identifier of the hyper cell is different from the identifier of the first hyper cell, the indication identifier of the hyper cell indicates the second hyper cell, and handover to the second hyper cell is performed based on the indication identifier of the hyper cell.

In this case, when a cell associated with the second hyper cell does not overlap the cell associated with the first hyper cell, an identifier of a second cell is determined based on a cell identifier list associated with the second hyper cell, and handover to the second cell is performed; or when a cell associated with the second hyper cell partially overlaps the cell associated with the first hyper cell, only handover to the second hyper cell may be performed, and cell handover is not performed. That is, the first cell still serves the terminal device. In other words, the first cell is included in a partially overlapping cell, and can still serve the terminal device.

When the indication identifier of the hyper cell is the same as the identifier of the first hyper cell, the terminal device performs mobility management within the first hyper cell in the connected state, in other words, is handed over to the second cell within the first hyper cell. It may be understood that the hyper cell of the terminal device does not change, but within the first hyper cell, the serving cell of the terminal device is handed over from the first cell to the second cell.

When the indication identifier of the hyper cell is different from the identifier of the first hyper cell, the terminal device in the connected state performs mobility management between the hyper cells. To be specific, the terminal device needs to perform handover between the hyper cells, in other words, be handed over from the first hyper cell to the second hyper cell, and may also perform handover between the cells, in other words, be handed over from the first cell to the second cell.

In an optional understanding, when the second cell includes a plurality of cells, the terminal device may select one cell from the plurality of cells for handover when the terminal device enters the connected state.

It should be noted that, in this application, the first hyper cell and the second hyper cell may alternatively be extended to a first hyper cell group and a second hyper cell group. The first hyper cell group may include one or more hyper cells, and the second hyper cell group may include one or more hyper cells. In this case, the terminal device determines, based on indication identifiers of the first hyper cell group and the hyper cell group, to perform mobility management within the first hyper cell group, or to perform mobility management between the first hyper cell group and the second hyper cell group. A specific execution manner is similar to the mobility management within the hyper cell and the mobility management between the hyper cells. Details are not described in this application again.

When determining that the mobility management needs to be performed, the terminal device needs to update related configuration information based on a requirement.

Specifically, the related configuration information that needs to be updated includes configuration information of the second cell and/or configuration information of the second hyper cell.

In a possible implementation, when the indication identifier of the hyper cell is the same as the identifier of the first hyper cell, the configuration information of the second cell needs to be determined.

It may be understood that when the indication identifier of the hyper cell is the same as the identifier of the first hyper cell, the terminal device in the idle state or the inactive state reselects the second cell, and the terminal device in the connected state is handed over to the second cell. When the hyper cell of the terminal device does not change, the configuration information of the common part is still the configuration information of the first hyper cell, but the serving cell changes. In this case, the configuration information corresponding to the cell needs to be updated, in other words, the configuration information of the dedicated part needs to use the configuration information of the second cell.

In an implementation, when the first satellite may preconfigure the configuration information of the second cell for the terminal device, the terminal device may activate the configuration information of the second cell.

It may be understood that, in this case, the first satellite may preconfigure, for the terminal device, the cell carried by the first satellite, that is, the second cell is the cell carried by the first satellite. In other words, the terminal device is still located within the coverage of the first satellite. Therefore, the terminal device can activate the configuration information of the cell carried by the first satellite.

In another implementation, the second satellite may send the configuration information of the second cell to the terminal device.

In this case, the serving satellite of the terminal device changes, in other words, the terminal device is handed over from the first satellite to the second satellite. The second satellite may send, to the terminal device, the cell carried by the second satellite. That is, the second cell is the cell carried by the second satellite. In other words, the first satellite has flown away, the second satellite takes over to serve the terminal device. Therefore, the cell carried by the second satellite can serve the terminal device.

It should be understood that, when the terminal device is in the idle state or the inactive state, the second satellite may send the configuration information of the second cell to the terminal device via a broadcast message.

In another possible implementation, when the indication identifier of the hyper cell is different from the identifier of the first hyper cell, the configuration information of the second hyper cell and the configuration information of the second cell need to be determined.

It may be understood that when the indication identifier of the hyper cell is different from the identifier of the first hyper cell, the indication identifier of the hyper cell indicates the second hyper cell, the terminal device in the idle state or the inactive state registers with the second hyper cell, and the terminal device in the connected state is handed over to the second hyper cell. When the mobility management is performed on the hyper cell of the terminal device, the configuration information of the common part needs to be updated, and the mobility management may also be performed on the cell. In this case, the configuration information of the common part is updated to the configuration information of the second hyper cell, the configuration information of the dedicated part corresponding to the cell may also be updated to the configuration information of the second cell.

It should be understood that, when the cell associated with the second hyper cell partially overlaps the cell associated with the first hyper cell, only the handover to the second hyper cell may be performed, and cell handover is not performed. In other words, the configuration information of the cell does not need to be updated, and the configuration information of the first cell is still used.

In an implementation, when a second hyper cell control entity may preconfigure the configuration information of the second hyper cell for the terminal device, the configuration information of the second hyper cell may be activated.

For example, when the terminal device obtains an identifier of the second hyper cell (the indication identifier of the hyper cell), the first hyper cell control entity or the terminal device activates the configuration information of the second hyper cell.

In another implementation, a second hyper cell control entity may send the configuration information of the second hyper cell to the terminal device.

It should be understood that, when the terminal device is in the idle state or the inactive state, the second hyper cell control entity may send the configuration information of the second hyper cell to the terminal device via a broadcast message.

The configuration information of the second cell may be preconfigured via the first satellite, or may be sent via the broadcast message of the second satellite. For details, refer to the descriptions of the configuration information of the second cell in the scenario in which the indication identifier of the hyper cell is the same as the identifier of the first hyper cell. Details are not described again.

It should be noted that, if the UE moves, the UE needs to compare distances between the location of the UE and reference locations within the plurality of hyper cells or hyper cell groups, trigger, based on a comparison result, the terminal device to initiate corresponding mobility management measurement and/or reporting, and determine, based on a measurement result, whether to be handed over to or reselect the second hyper cell.

For example, in an earth-centered, earth-fixed (ECEF, Earth centered earth fixed) coordinate system, when the location of the UE is (x1, x2, x3), a reference location within the first hyper cell is (y1, y2, y3), and a reference location within the second hyper cell is (z1, z2, z3), a distance between the location of the UE and the reference location within the first hyper cell is

$$d1 = \sqrt{(x1-y1)^2 + (x2-y2)^2 + (x3-y3)^2} \; ;$$

and similarly, a distance between the location of the UE and the reference location within the second hyper cell is

$$d2 = \sqrt{(x1-z1)^2 + (x2-z2)^2 + (x3-z3)^2} \; .$$

When the distance $d1$ between the UE and the reference location within the first hyper cell is greater than a threshold 1, and the distance d2 between the UE and the reference location within the second hyper cell is less than a threshold 2, the terminal UE may initiate corresponding mobility management measurement and/or reporting. For example, the threshold 1 may be set to 500 km, and the threshold 2 may be set to 600 km.

In a possible implementation, the terminal device determines, based on the first information and one or more of information such as location information, speed information, time information, and signal quality information of the terminal device, whether to perform mobility management within the first hyper cell, or whether to perform mobility management between the first hyper cell and the second hyper cell.

For example, the terminal device determines, based on the first information and the location information of the terminal device, whether to perform mobility management within the first hyper cell, or whether to perform mobility management between the first hyper cell and the second hyper cell.

When the distance between the location of the terminal device and the reference location within the first hyper cell is greater than the threshold 1 (for example, 100 km), and the distance between the location of the terminal device and the reference location within the second hyper cell is less than the threshold 2 (for example, 50 km), the terminal device initiates signal measurement on a cell set within the second hyper cell. When a measurement result reaches a preset condition (for example, signal quality is greater than a threshold 3, and the threshold 3 is, for example, signal strength of -6 dB), and the indication identifier that is of the hyper cell and that is indicated by the first information is different from the identifier of the first hyper cell, the terminal device is handed over/reselected from the first hyper cell to the second hyper cell.

For example, the terminal device determines, based on the first information and the location information and the time information of the terminal device, whether to perform mobility management within the first hyper cell, or whether to perform mobility management between the first hyper cell and the second hyper cell.

When the distance between the location of the terminal device and the reference location within the first hyper cell and/or the first cell is less than the threshold 1 (for example, 100 km), and a time period [t1, t2] is reached (for example, t1 is a UTC time start point 03:00:00, and t2 is a time offset relative to t1, and is for example, 10 seconds), the terminal device initiates signal measurement on a cell set within the first hyper cell. When a measurement result reaches a preset condition (for example, signal quality is greater than a given threshold 3, and the given threshold is, for example, signal strength of -6 dB), and the indication identifier that is of the hyper cell and that is indicated by the first information is the same as the identifier of the first hyper cell, the terminal device is handed over/reselected from the first cell within the first hyper cell to the second cell within the first hyper cell.

It should be understood that when the UE does not move, and only the network device moves, the UE is still in the original hyper cell, and the hyper cell control entity usually does not need to be updated; or when the UE does not move or a moving range is small, for example, the distance between the location of the terminal device and the reference location within the first hyper cell is less than a threshold 4 (for example, 10 km), the UE at an edge of the hyper cell may receive a plurality of hyper cell identifiers. If the hyper cell currently associated with the UE belongs to the plurality of hyper cell identifiers, the hyper cell control entity does not need to be updated.

Based on the foregoing technical solution, a two-layer network architecture is provided. One hyper cell may be associated with a plurality of cells, the plurality of cells use same configuration information of a common part, and configuration information of a dedicated part for each cell is provided by a serving satellite. The terminal device may determine, within the hyper cell based on the mobility management information indicated by the network device, to perform mobility management within the hyper cell or perform mobility management between the hyper cells, and update the corresponding configuration information. If the mobility management is performed within the hyper cell, the updated configuration information of the dedicated part for the cell may be obtained via the satellite, or the preconfigured configuration information of the dedicated part may be activated. If the mobility management is performed between the hyper cells, the configuration information of the corresponding common part may be obtained via the hyper cell control entity corresponding to the updated hyper cell, or the configuration information of the preconfigured common part may be activated. Configuration overheads of the common part do not need to be updated in the mobility management within the hyper cell, the configuration information of the common part for the mobility management needs to be updated only once in the mobility management between the hyper cells, and configuration information of the common part no longer needs to be updated for subsequent mobility management within a target hyper cell. This also saves some configuration overheads of the common part, thereby reducing signaling overheads. Further, the configuration information of the common part needs to be updated once only when the mobility management is performed between the hyper cells, and when the mobility management is performed within the hyper cell, only configuration information of a dedicated part corresponding to a target cell needs to be updated. This avoids a case in which a complete set of configuration information needs to be updated due to frequent cell handovers, so that interruption time caused by the mobility management can be reduced, thereby improving handover efficiency.

The following describes a mobility management control plane protocol stack architecture applicable to the architecture in FIG. 3 and the method 400 in FIG. 4.

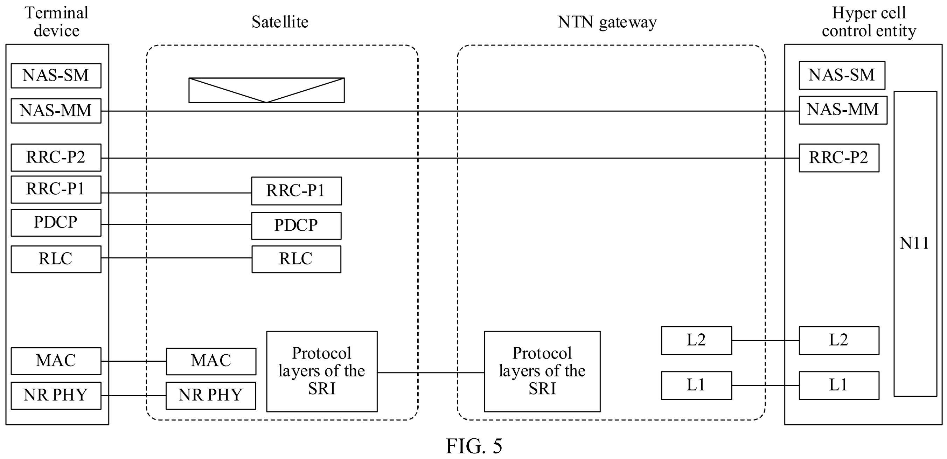

FIG. 5 is a diagram of a mobility management control plane protocol stack architecture according to an embodiment of this application.

The control plane protocol stack architecture is a protocol stack architecture between a terminal device and a satellite or a hyper cell control entity.

Layers between a control plane of the terminal device and a control plane of the satellite or the hyper cell control entity may be connected to each other for signaling exchange.

The control plane includes an RRC layer, a packet data convergence protocol (packet data convergence protocol, PDCP) PDCP layer, a radio link control (radio link control, RLC) layer, a medium access control (medium access control, MAC) layer, and a physical layer (physical layer, PHY). A user plane includes a service data adaptation protocol (service data adaptation protocol, SDAP) layer, a PDCP layer, an RLC layer, a MAC layer, and a PHY layer.

The radio resource control (radio resource control, RRC) layer is used to manage and control a radio resource. The SDAP layer is used to perform mapping between a quality of service (quality of service, QoS) flow (flow) and a data radio bearer (data radio bearer, DRB), the SDAP is used to map the QoS flow to the DRB, and the DRB includes two layers: a PDCP layer and an RLC layer. The PDCP layer is used to perform functions such as header compression, decompression, encryption/decryption, integrity protection, and integrity verification on user plane data, and the PDCP layer is configured via an RRC message. The MAC layer is used to: perform mapping between logical channels and transport channels, and multiplex MAC data from different logical channels onto one transport block. The protocol layers shown in FIG. 5 are merely examples for description. These protocol layers may be added or deleted. This is not limited in embodiments of this application.

In this application, the RRC layer is used to configure mobility management-related configuration information, for example, the configuration information of the first hyper cell, the configuration information of the second hyper cell, the configuration information of the first cell, and the configuration information of the cell in the method 400.

In this application, the RRC layer may be divided into two parts, for example, RRC-P1 (part 1) and RRC-P2 (part 2).

RRC-P1 is used to configure, for a satellite node, configuration information of a dedicated part for a cell, for example, the configuration information of the first cell or the configuration information of the second cell in the method 400.

For example, the configuration information of the cell includes but is not limited to at least one of the following content: UE-specific RRC (UE-specific RRC), namely, a dedicated-RRC (dedicated-RRC) part, which is specifically, for example, a dedicated-synchronization signal block (synchronization signal block, SSB)-based measurement timing configuration (Dedicated-SSB-based measurement timing configuration, Dedicated-SMTC) and a dedicated-bandwidth part/random access channel (Dedicated-bandwidth part/random access channel, Dedicated-BWP/RACH) configuration.

RRC-P2 is used to configure configuration information of a common part for a hyper cell control entity, for example, the configuration information of the first hyper cell or the configuration information of the second hyper cell in the method 400.

For example, the configuration information of the hyper cell includes but is not limited to at least one of the following content: common RRC, namely, a common-RRC (common RRC) part, which is specifically, for example, a common-SMTC (common-SMTC) configuration and a common-BWP/RACH (common BWP/RACH) configuration.

For example, the configuration information of the hyper cell may be the common-SMTC configuration, where a periodicity and a length of the common-SMTC are the same as those of smtc1, and a maximum periodicity is 160 ms; and may further include information such as a reference location and a measurement priority of the hyper cell.

For example, the configuration information of the cell may be the dedicated-SMTC configuration, where a plurality of dedicated-SMTCs are configured, and an SMTC-offset is added, to resolve a problem of a delay difference measured between different satellites/-cells; and may further include ephemeris information of different neighboring satellites at different moments.

For example, the configuration information of the hyper cell may be the common-RACH configuration, and the common-RACH includes an RO time domain configuration (prach-configurationIndex), a preamble (preamble), and a msg1-FDM factor in frequency domain.

For example, the configuration information of the cell may be the dedicated-RACH configuration, and a plurality of dedicated-RACH scaling factors and a quantity of consecutive frames in access occasions (random access channel occasions, ROs) are configured, to adapt to (handover-oriented) non-uniform access requirements of different cells/beam positions.

The foregoing names of configuration signaling are merely example for description, and another naming manner may be used. This is not limited in embodiments of this application.

It should be noted that the RRC part in the figure may be understood as being split into two parallel sublayers, namely, RRC-P1 and RRC-P2.

In the following embodiments, for example, the configuration information of the hyper cell is RRC-P2, and the configuration information of the cell is RRC-P1.

In the foregoing solution, a solution in which the terminal device may determine, within the hyper cell based on the indication of the network device, whether to perform mobility management within the hyper cell or whether to perform mobility management between the hyper cells is described. The following describes in detail specific solutions in different scenarios.

First, an example solution in which the terminal device performs mobility management within the hyper cell after initial access is described.

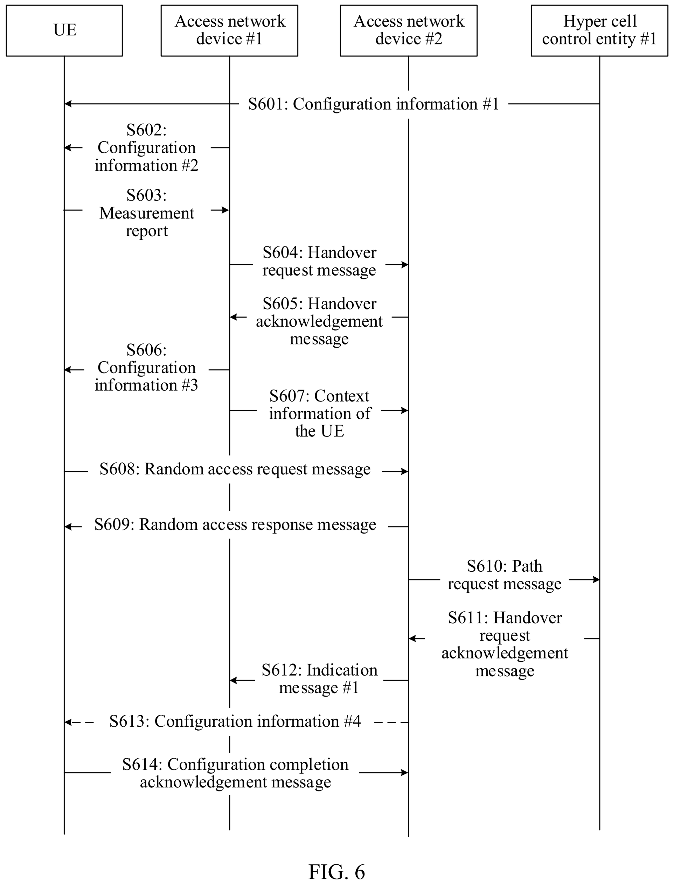

FIG. 6 is a diagram of a mobility management procedure within a hyper cell according to an embodiment of this application. The solution shown in FIG. 6 and the mobility management procedure within the hyper cell in the method 400 may be mutually referenced.

In this application, mobility management within the hyper cell includes reselection of a serving cell when the UE is in an idle state or an inactive state, and a handover of a serving cell or a serving cell group when the UE is in a connected state. The following uses the handover of the serving cell as an example for description.

In this application, an SSB is used as an example of a broadcast signal.

In this embodiment, the UE is located in a hyper cell #1, the hyper cell #1 may be an example of the first hyper cell in the method 400, the hyper cell #1 corresponds to a hyper cell control entity #1, and the hyper cell control entity #1 may be an example of the first hyper cell control entity in the method 400.

Within the hyper cell #1, the UE is handed over from an access network device #1 to an access network device #2, and is handed over from a cell #1 to a cell #2. The cell #1 may be an example of the first cell in the method 400, and the cell #2 may be an example of the second cell in the method 400.

The cell #1 is a cell carried by a satellite #1, and the cell #2 may be a cell carried by the satellite #1, or may be a cell carried by a satellite #2. The satellite #1 may be an example of the first satellite in the method 400, and the satellite #2 may be an example of the second satellite in the method 400.

Specifically, the following steps are included.

S601: The hyper cell control entity #1 sends configuration information #1 to the UE.

During initial access, the satellite #1 or the hyper cell control entity #1 may deliver mobility management-related configuration information of a plurality of cells (a serving cell and a neighboring cell) to the terminal device via a broadcast message.

Specifically, the hyper cell control entity #1 may send the configuration information #1 to the UE, and correspondingly, the UE receives the configuration information #1.

The configuration information #1 may include RRC configuration information of the hyper cell #1.

The configuration information #1 may be represented as RRC-P2 information.

S602: The access network device #1 sends configuration information #2 to the UE.

The configuration information #2 may include measurement-related configuration information in RRC configuration information of the cell #1 (a source serving cell).

The configuration information #2 may be represented as RRC-P1 MC information.

S603: The UE sends a measurement report to the access network device #1.

After the UE receives the SSB, the UE performs mobility management measurement based on SSB-related measurement configurations in the configuration information #1 and the configuration information #2, for example, signal quality (for example, reference signal received power (reference signal received power, RSRP), reference signal received quality (Reference Signal Received Quality, RSRQ), and a signal to interference plus noise ratio (signal to interference plus noise ratio, SINR)) of the serving cell or the neighboring cell.

The UE reports a measurement result to a network.

A manner of reporting the measurement result may be periodic reporting, or may be event-triggered reporting. This is not limited in embodiments of this application.

For example, in the event-triggered reporting, a reporting condition may be configured as that signal quality of the serving cell is less than a threshold 1 and/or signal quality of the neighboring cell is greater than a threshold 2.

S604: The access network device #1 sends a handover request message to the access network device #2.

The access network device #1 determines, based on the measurement result reported by the UE, whether to perform the handover of the serving cell.

Specifically, the access network device #1 selects an appropriate target access network device based on the measurement result. The access network device #2 is used as an example.

The access network device #1 sends the handover request message to the access network device #2.

S605: The access network device #2 sends a handover acknowledgement message to the access network device #1.

S606: The access network device #1 sends configuration information #3 to the UE.

The configuration information #3 may include handover-related configuration information in the RRC configuration information of the cell #1.

Specifically, the configuration information #3 includes handover-related configuration information such as a subsequent handover-related resource and/or a conditional handover trigger condition.

For example, a handover trigger condition may be that RSRP_HO_SSB of a target satellite/target access network device/target cell is greater than a first threshold.

For example, the handover trigger condition may include a plurality of satellites and a plurality of subsequent handovers.

The configuration information #3 may be represented as RRC-P1 HO information.

S607: The access network device #1 sends context information of the UE to the access network device #2.

It should be noted that, for the handover between the cells within the hyper cell, a common context remains unchanged. Therefore, the context information of the UE does not include the common context stored in the hyper cell control entity #1.

S608: The UE sends a random access request message to the access network device #2.

S609: The access network device #2 sends a random access response message to the UE.

S610: The access network device #2 sends a path switch request message to the hyper cell control entity #1.

S611: The hyper cell control entity #1 sends a path switch request acknowledgement message to the access network device #2.

S612: The access network device #2 sends an indication message #1 to the access network device #1.

The indication message #1 indicates the access network device #1 to release the context information of the UE.

The context information of the UE does not include the common context stored in the hyper cell control entity #1.

S613: The access network device #2 sends configuration information #4 to the UE.

The configuration information #4 includes measurement-related configuration information in RRC configuration information of a target serving cell (the cell #2).

The configuration information #4 may be represented as RRC-P1 MC information.

It should be noted that, during the initial access, the satellite #1 may preconfigure the RRC configuration information of the cell #2 for the terminal device, and the terminal device may activate the RRC configuration information of the cell #2.

S613 is an optional step.

S614: The UE sends a configuration completion acknowledgement message to the access network device #2.

In this application, for example, the RRC-P1 MC information includes one or more of the following information: broadcast signal measurement-related measurement configurations such as SMTC periodicities of the local and neighboring cells, SMTC duration, and an SMTC offset, and related information such as a measurement priority, reference locations and distance thresholds of the local and neighboring cells, and service time t_Service. The foregoing names of configuration signaling are merely example for description, and another naming manner may be used. This is not limited in embodiments of this application.

In this application, for example, the RRC-P1 HO information includes one or more of the following information: (dedicated or random access) related configuration such as a preamble index/mask index, an RO configuration periodicity, an RO frequency domain resource, and a beam-related identifier SSB index, and timing advance (TA) related information. The foregoing names of configuration signaling are merely example for description, and another naming manner may be used. This is not limited in embodiments of this application.

Based on the foregoing technical solution, when the terminal device performs mobility management within the hyper cell, the terminal device may obtain the configuration information of the target serving cell or activate the preconfigured configuration information of the target serving cell via the target access network device, and the configuration information corresponding to the hyper cell remains unchanged. That is, signaling for updating the configuration information of a common part is avoided, so that overheads of configuration signaling corresponding to the configuration information of the common part can be saved.

The method 600 shows the mobility management procedure within the hyper cell. Further, an embodiment of this application provides a mobility management procedure within a hyper cell based on a handover-specific reference signal. The following describes another example solution in which a terminal device performs mobility management within the hyper cell based on a broadcast signal after initial access.

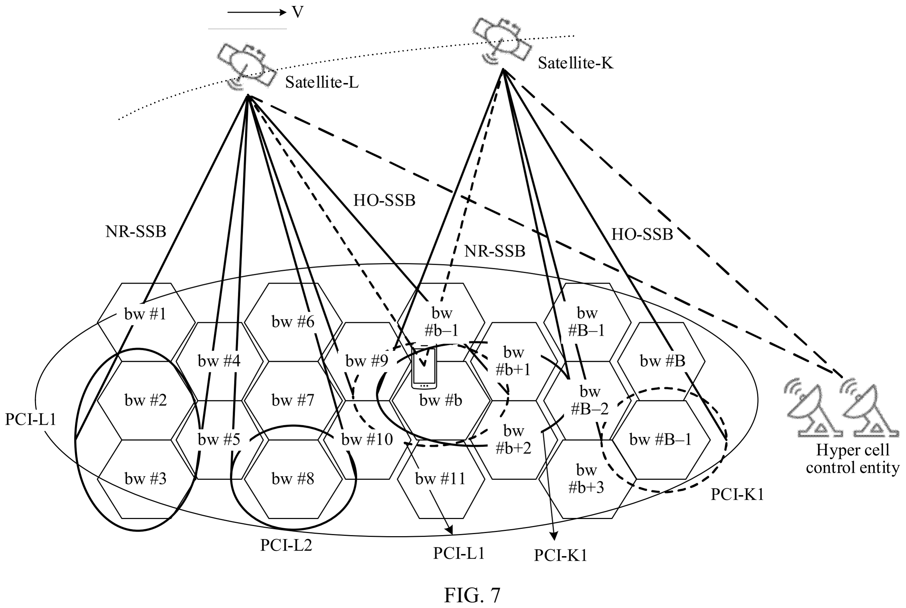

FIG. 7 is a diagram of a mobility management procedure within a hyper cell that is based on a broadcast signal according to an embodiment of this application. The solution shown in FIG. 7 and the mobility management procedure within the hyper cell in the method 400 may be mutually referenced.

In this application, a network device may send a broadcast signal to a terminal device in different time periods.

The network device includes a satellite, a hyper cell control entity corresponding to the satellite, and a terrestrial station device.

The network device sends a broadcast signal to a corresponding service area via a carried cell.

For example, in different time periods, the network device (the hyper cell control entity, the satellite, or the terrestrial station device) may serve a specific geographical location area (for example, a beam position set {bw-b1, ..., bw-bN}) via a first cell set Cell lists (including one or more cells {PCI-K1, ..., PCI-KM}).

As shown in FIG. 7, a satellite-L may send a broadcast signal #1 and configuration information #a to areas of a beam position bw #2 and a beam position bw #3 via a PCI-L1 cell. Correspondingly, the terminal device receives the broadcast signal #1 and the configuration information #a, performs measurement on the broadcast signal #1 based on the configuration information #a, and triggers a handover based on a measurement result of the broadcast signal #1.

The satellite-L may send a broadcast signal #2 and configuration information #b to an area of a beam position bw #b via the PCI-L1 cell. Correspondingly, the terminal device receives the broadcast signal #2 and the configuration information #b, performs measurement on the broadcast signal #2 based on the configuration information #b, and triggers a handover based on a measurement result of the broadcast signal #2.

A satellite-K may send a broadcast signal #1 and configuration information #a to the area of the beam position bw #b via a PCI-K1 cell. Correspondingly, the terminal device receives the broadcast signal #1 (an NR-SSB) and the configuration information #a, performs measurement on the broadcast signal #1 based on the configuration information #a, and triggers a handover based on a measurement result of the broadcast signal #1.

The satellite-K may send a broadcast signal #2 and configuration information #b to an area of a beam position bw #B-1 via the PCI-K1 cell. Correspondingly, the terminal device receives the broadcast signal #2 (an HO-SSB) and the configuration information #b, performs measurement on the broadcast signal #2 based on the configuration information #b, and triggers a handover based on a measurement result of the broadcast signal #2. A configuration of a handover resource may be carried in an RRC-P1 HO.

For example, the broadcast signal #1 may be the NR-SSB, and the broadcast signal #2 may be the HO-SSB.

The configuration information #a and the configuration information #b may include RRC-P1 MC information and RRC-P1 HO information.

For content of the RRC-P1 MC information and the RRC-P1 HO information, refer to the descriptions in the method 600. Details are not described again.

The following describes in detail a mobility management procedure for an L1/L2-triggered handover and a conditional handover based on a handover-specific reference signal.

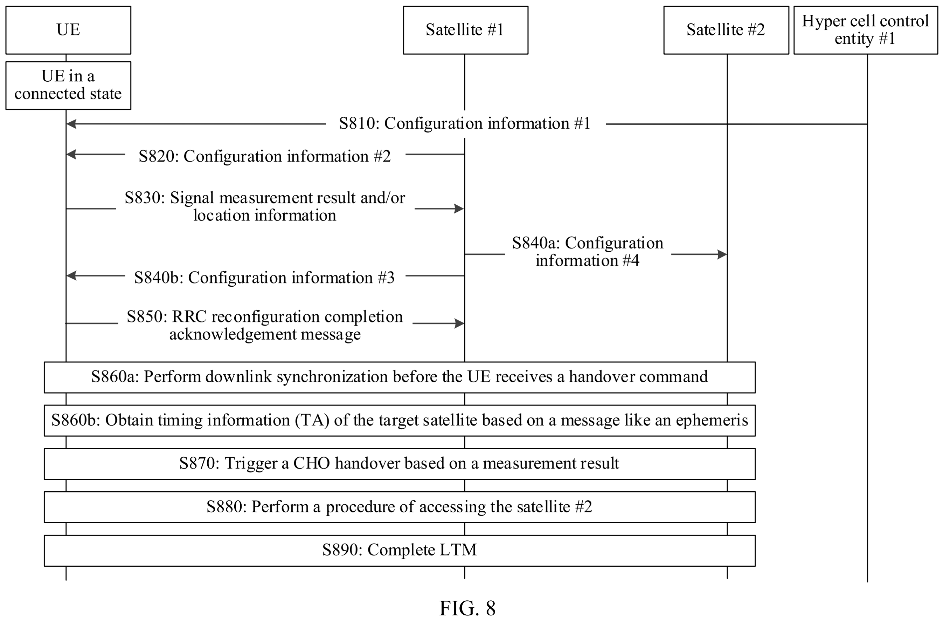

FIG. 8 is a diagram of a mobility management procedure within a hyper cell that is based on a broadcast signal and conditional handover according to an embodiment of this application. The solution shown in FIG. 8 and the mobility management procedure within the hyper cell in the method 400 may be mutually referenced.

In this application, mobility management within the hyper cell includes reselection of a serving cell when UE is in an idle state or an inactive state, and a handover of a serving cell or a serving cell group when the UE is in a connected state. The following uses the handover of the serving cell as an example for description.

In this embodiment, the UE is located in a hyper cell #1, the hyper cell #1 may be an example of the first hyper cell in the method 400, the hyper cell #1 corresponds to a hyper cell control entity #1, and the hyper cell control entity #1 may be an example of the first hyper cell control entity in the method 400.

Within the hyper cell #1, the UE is handed over from a serving cell (a cell #1) carried by a satellite #1 to a target serving cell (a cell #2) carried by a satellite #2.

The satellite #1 may be an example of the first satellite in the method 400, and the satellite #2 may be an example of the second satellite in the method 400.

Specifically, the following steps are included.

S810: The hyper cell control entity #1 sends configuration information #1 to the UE.

During initial access, the satellite #1 or the hyper cell control entity #1 may deliver mobility management-related configuration information of a plurality of cells (a serving cell and a neighboring cell) to the terminal device via a broadcast message.

Specifically, the hyper cell control entity #1 may send the configuration information #1 to the UE, and correspondingly, the UE receives the configuration information #1.

The configuration information #1 may include RRC configuration information of the hyper cell #1.

The configuration information #1 may be represented as RRC-P2 information.

S820: The satellite #1 sends configuration information #2 to the UE.

The configuration information #2 may include measurement-related configuration information in RRC configuration information of a source serving cell (a cell #1).

The configuration information #2 may be represented as RRC-P1 MC information.

S830: The UE sends a signal measurement result and/or location information to the satellite #1.

After the UE receives an SSB, the UE performs mobility management measurement based on SSB-related measurement configurations in the configuration information #1 and the configuration information #2, for example, signal quality (such as RSRP/RSRQ/SINR) of the serving cell or the neighboring cell.

The signal measurement result may include an NR-SSB/HO-SSB-based signal measurement result.

The location information indicates a current location of the UE.

For example, the location information may be represented by beam position information such as a beam position index or a beam position reference location.

A manner of reporting the measurement result and/or location information may be periodic reporting, or may be event-triggered reporting. This is not limited in embodiments of this application.

S840a: The satellite #1 sends configuration information #4 to the satellite #2.

The configuration information #4 includes handover-related configuration information.

The handover-related configuration information is, for example, an HO-SSB measurement periodicity, measurement duration, a measurement offset, ephemeris information, and access resource configurations (including a prach preamble index/mask index, an RO resource, an RNTI, and the like) corresponding to different time periods.

S840b: The satellite #1 sends configuration information #3 to the UE.

The configuration information #3 includes handover-related configuration information in the RRC configuration information of the source serving cell (the cell #1).

Specifically, the configuration information #3 includes handover-related configuration information such as a subsequent handover-related resource and/or a conditional handover trigger condition.

For example, a handover trigger condition may be that RSRP_HO_SSB of a target satellite/target access network device/target cell is greater than a first threshold.

For example, the handover trigger condition may include a plurality of satellites and a plurality of subsequent handovers.

S850: The UE sends an RRC reconfiguration completion acknowledgement message to the satellite #1.

S860a: Perform downlink synchronization before the UE receives a handover command.

When the UE moves autonomously, the UE performs downlink synchronization via an NR-SSB.

When the satellite #1 moves, the UE performs downlink synchronization via an HO-SSB.

It may be understood that the mobility handover of the UE or a network device is triggered based on the two broadcast signals.

S860b: Obtain timing information (TA) of the satellite #2 based on a message like an ephemeris.

S870: Trigger a CHO handover based on a measurement result.

The CHO handover is triggered based on an L1/L3 measurement result of the NR-SSB or HO-SSB.

S880: Perform a procedure of accessing the satellite #2.

For example, the access procedure may use a PDCCH ordered RACH procedure or a RACH-less HO procedure.

It should be understood that the RACH procedure may alternatively be performed based on a system message corresponding to the HO-SSB. The UE performs blind detection via a UE-specific ID or a group-RNTI within the hyper cell #1. If the detection succeeds, handover access may be performed via a corresponding RO resource.

S890: Complete LTM.

Based on the foregoing technical solution, when the terminal device performs mobility management within the hyper cell, a serving satellite of the terminal device may change, the target satellite is used to obtain configuration information that is of a target serving cell and that is carried by the target satellite or activate the preconfigured configuration information of the target serving cell, and configuration information of a common part corresponding to the hyper cell remains unchanged. That is, signaling for updating the configuration information of the common part is avoided, so that signaling overheads generated in a mobility management process can be saved.

The following describes an example solution in which the terminal device performs mobility management between two hyper cells after initial access.

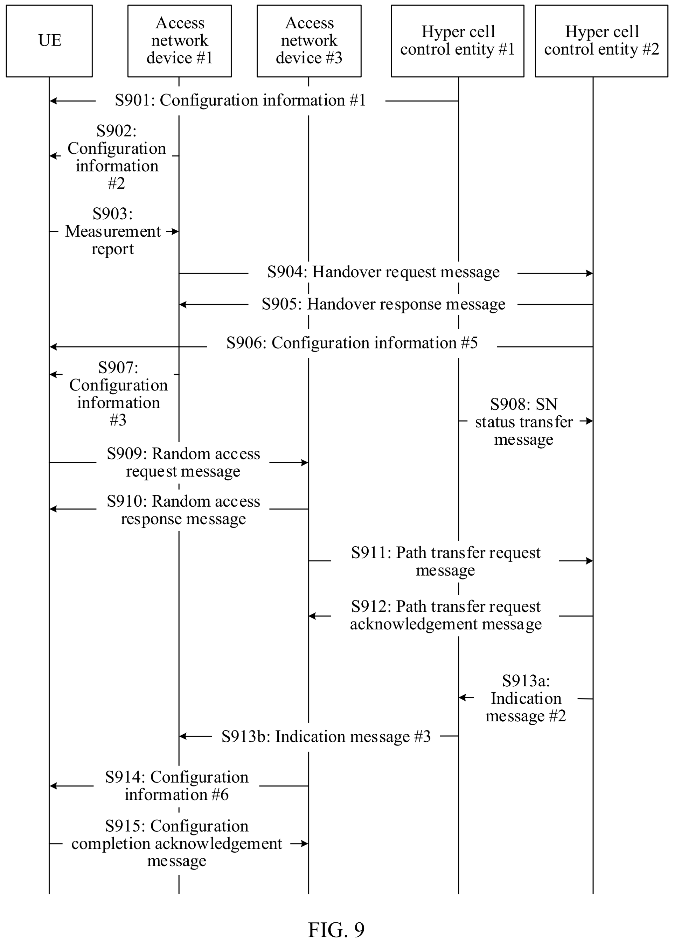

FIG. 9 is a diagram of a mobility management procedure between hyper cells according to an embodiment of this application. The solution shown in FIG. 9 and the mobility management procedure between the hyper cells in the method 400 may be mutually referenced.

In this application, the mobility management between the hyper cells includes hyper cell registration performed by the terminal device in an idle state or an inactive state, and hyper cell handover performed by the terminal device in a connected state.

In this embodiment, an example in which cells associated with the two hyper cells do not overlap is used. To be specific, when the handover or reselection is performed between the hyper cells, and the handover or reselection also needs to be performed between the cells.

Between two hyper cells, the UE is handed over from a cell #1 of a hyper cell #1 to a cell #3 of a hyper cell #2. The cell #1 corresponds to an access network device #1, the cell #3 corresponds to an access network device #3, the hyper cell #1 corresponds to a hyper cell control entity #1, and the hyper cell #2 corresponds to a hyper cell control entity #2, to implement the handover between the hyper cells.

The hyper cell #1 may be an example of the first hyper cell in the method 400, and the hyper cell #2 may be an example of the second hyper cell in the method 400. The hyper cell control entity #1 may be an example of the first hyper cell control entity in the method 400, the hyper cell control entity #2 may be an example of the second hyper cell control entity in the method 400, the cell #1 may be an example of the first cell in the method 400, and the cell #3 may be an example of the second cell in the method 400.

The cell #1 is a cell carried by a satellite #1, and the cell #3 may be a cell carried by the satellite #1, or may be a cell carried by a satellite #2. The satellite #1 may be an example of the first satellite in the method 400, and the satellite #2 may be an example of the second satellite in the method 400.

Specifically, the following steps are included.

S901: The hyper cell control entity #1 sends configuration information #1 to the UE.

During initial access, the satellite #1 or the hyper cell control entity #1 may deliver mobility management-related configuration information of a plurality of cells (a serving cell and a neighboring cell) to the terminal device via a broadcast message.

Specifically, the hyper cell control entity #1 may send the configuration information #1 to the UE, and correspondingly, the UE receives the configuration information #1.

The configuration information #1 may include RRC configuration information of the hyper cell #1.

The configuration information #1 may be represented as RRC-P2 information.

S902: The access network device #1 sends configuration information #2 to the UE.

The configuration information #2 may include measurement-related configuration information in RRC configuration information of the cell #1.

The configuration information #2 may be represented as RRC-P1 MC information.

S903: The UE sends a measurement report to the access network device #1.

After the UE receives an SSB, the UE performs mobility management measurement based on SSB-related measurement configurations in the configuration information #1 and the configuration information #2, for example, signal quality (such as RSRP/RSRQ/SINR) of the serving cell or the neighboring cell.

The UE reports a measurement result to a network.

A manner of reporting the measurement result may be periodic reporting, or may be event-triggered reporting. This is not limited in embodiments of this application.

For example, in the event-triggered reporting, a reporting condition may be configured as that signal quality of the serving cell is less than a threshold 1 and/or signal quality of the neighboring cell is greater than a threshold 2.

S904: The access network device #1 sends a handover request message to the hyper cell control entity #2.

The access network device #1 determines, based on the measurement result reported by the UE, whether to perform the handover of the serving cell.

Specifically, the access network device #1 selects an appropriate target access network device based on the measurement result. The access network device #3 is used as an example.

The access network device #1 sends the handover request message to the access network device #3.

S905: The hyper cell control entity #2 sends a handover response message to the cell #1.

S906: The hyper cell control entity #2 sends configuration information #5 to the UE.

The configuration information #5 may include RRC configuration information of the hyper cell #2.

It should be understood that the RRC configuration information of the hyper cell #2 may alternatively be preconfigured for the UE, and the UE or the hyper cell control entity #1 may activate the RRC configuration information of the hyper cell #2.

S906 is an optional step.

S907: The access network device #1 sends configuration information #3 to the UE.

The configuration information #3 may include handover-related configuration information in the RRC configuration information of the cell #1 (a source serving cell).

Specifically, the configuration information #3 includes a subsequent handover-related resource and/or a conditional handover trigger condition.

For example, a handover trigger condition may be that RSRP_HO_SSB of a target satellite is greater than a first threshold.

For example, the handover trigger condition may include a plurality of satellites and a plurality of subsequent handovers.

The configuration information #3 may be represented as RRC-P1 HO information.

S908: The hyper cell control entity #1 sends an SN status transfer message to the hyper cell control entity #2.

S909: The UE sends a random access request message to the access network device #3.

S910: The access network device #3 sends a random access response message to the UE.

S911: The access network device #3 sends a path transfer request message to the hyper cell control entity #2.

S912: The hyper cell control entity #2 sends a path transfer request acknowledgement message to the access network device #3.

S913a: The hyper cell control entity #2 sends an indication message #2 to the hyper cell control entity #1.

The indication message #1 indicates the hyper cell control entity #1 to release the context information of the UE.

S913b: The hyper cell control entity #1 sends an indication message #3 to the access network device #1.

The indication message #3 indicates the access network device #1 to release the context information of the UE.

The context information of the UE is not stored in a common context of the hyper cell #1.

S914: The access network device #3 sends configuration information #6 to the UE.

The configuration information #6 includes measurement-related configuration information in RRC configuration information of the cell #3.

The configuration information #6 may be represented as RRC-P1 MC information.

It should be noted that, during the initial access, the satellite #1 may preconfigure the RRC configuration information of the cell #3 for the UE, and the UE may activate the RRC configuration information of the cell #3 (a target serving cell).

S914 is an optional step.

S915: The UE sends a configuration completion acknowledgement message to the access network device #3.

For content of the RRC-P1 MC information and the RRC-P1 HO information, refer to the descriptions in the method 600. Details are not described again.

Based on the foregoing technical solution, when performing mobility management between the hyper cells, the terminal device obtains the corresponding configuration information via the hyper cell control entity corresponding to the target hyper cell; or activates the preconfigured configuration information, and obtains the configuration information of the cell via the access network device corresponding to the target cell; or may activate the preconfigured configuration information of the cell. When the terminal device performs mobility management between the first hyper cell and the second hyper cell, the terminal device performs handover or reselection between the hyper cells and the cells, and the cells within the hyper cells share some configurations (configuration information of a common part), so that overheads of some configuration signaling can also be saved. Further, the configuration information of the common part for the mobility management needs to be updated only once for the mobility management between the hyper cells, and configuration information of a common part no longer needs to be updated for subsequent mobility management within the target hyper cell, so that interruption time caused by the mobility management can be reduced, and signaling overheads generated in a mobility management process can be saved.

It should be understood that sequence numbers of the foregoing processes do not mean an execution sequence. The execution sequence of the processes should be determined based on functions and internal logic of the processes, and should not be construed as any limitation on implementation processes of embodiments of this application.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art may be aware that, in combination with units and algorithm steps of the examples described in embodiments disclosed in this specification, this application may be implemented by using hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

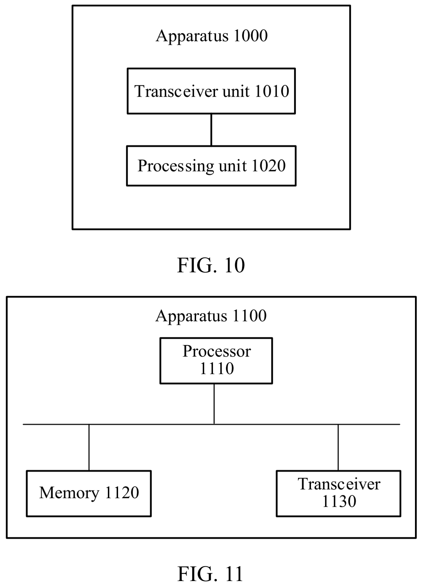

The foregoing describes, in detail with reference to FIG. 4 to FIG. 9, the methods provided in embodiments of this application. The following describes, in detail with reference to FIG. 10 and FIG. 11, apparatuses provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

FIG. 10 is a diagram of a structure of a communication apparatus according to an embodiment of this application.

The apparatus 1000 includes a transceiver unit 1010 and a processing unit 1020. The transceiver unit 1010 may be configured to implement a corresponding communication function, and the processing unit 1020 may be configured to process data.

Optionally, the transceiver unit 1010 may also be referred to as a communication interface or a communication unit, and includes a sending unit and/or a receiving unit. The transceiver unit 1010 may be a transceiver (including a transmitter and/or a receiver), an input/output interface (including an input interface and/or an output interface), a pin, a circuit, or the like. The transceiver unit 1010 may be configured to perform a sending step and/or a receiving step in the foregoing method embodiments.

Optionally, the processing unit 1020 may be a processor (which may include one or more processors), a processing circuit having a processor function, or the like, and may be configured to perform a step other than sending and receiving in the foregoing method embodiments.

Optionally, the apparatus 1000 further includes a storage unit. The storage unit may be a memory, an internal storage unit (for example, a register or a cache), an external storage unit (for example, a read-only memory or a random access memory), or the like. The storage unit is configured to store instructions. The processing unit 1020 executes the instructions stored in the storage unit, to enable the communication apparatus to perform the foregoing methods.

In a design, the apparatus 1000 may be configured to perform an action performed by the terminal device in the foregoing method embodiments. For example, the apparatus 1000 may be configured to perform an action performed by the terminal device in the foregoing method 400, 600, 800, or 900. In this case, the apparatus 1000 may be a component of the terminal device. The transceiver unit 1010 is configured to perform sending/receiving-related operations on a terminal device side in the foregoing method embodiments, and the processing unit 1020 is configured to perform processing-related operations of the terminal device in the foregoing method embodiments.

For example, the transceiver unit 1010 is configured to receive first information from a first satellite, where the first information includes information for performing mobility management by the terminal device. The processing unit 1020 is configured to: determine, based on the first information, to perform mobility management within the first hyper cell, or to perform mobility management between the first hyper cell and a second hyper cell, where the second hyper cell is associated with a plurality of cells.

It should be understood that the transceiver unit 1010 and the processing unit 1020 may further perform other operations performed by the terminal device in any one of the method 400, 600, 800, or 900. Details are not described herein again.

In a design, the apparatus 1000 may be configured to perform an action performed by the first satellite in the foregoing method embodiments. For example, the apparatus 1000 may be configured to perform an action performed by the first satellite in the foregoing method 400, 600, 800, or 900. In this case, the apparatus 1000 may be a component of the first satellite. The transceiver unit 1010 is configured to perform sending/receiving-related operations on a first satellite side in the foregoing method embodiments, and the processing unit 1020 is configured to perform processing-related operations of the first satellite in the foregoing method embodiments.

For example, the processing unit 1020 is configured to determine first information, where the first information includes information for performing mobility management by a terminal device. The transceiver unit 1010 is configured to send the first information to the terminal device.

It should be understood that the transceiver unit 1010 and the processing unit 1020 may further perform other operations performed by the first satellite in any one of the method 400, 600, 800, or 900. Details are not described herein again.

In a design, the apparatus 1000 may be configured to perform an action performed by the first hyper cell control entity in the foregoing method embodiments. For example, the apparatus 1000 may be configured to perform an action performed by the first satellite in the foregoing method 400, 600, 800, or 900. In this case, the apparatus 1000 may be a component of the first hyper cell control entity. The transceiver unit 1010 is configured to perform sending/receiving-related operations on a first hyper cell control entity side in the foregoing method embodiments, and the processing unit 1020 is configured to perform processing-related operations of the first hyper cell control entity in the foregoing method embodiments.

For example, the processing unit 1020 is configured to determine configuration information of a first hyper cell. The transceiver unit 1010 is configured to send the configuration information of the first hyper cell to a terminal device.

It should be understood that the transceiver unit 1010 and the processing unit 1020 may further perform other operations performed by the first satellite in any one of the method 400, 600, 800, or 900. Details are not described herein again.

It should be understood that the apparatus 1000 herein is embodied in a form of a functional unit. The term "unit" herein may be an application-specific integrated circuit (application-specific integrated circuit, ASIC), an electronic circuit, a processor (for example, a shared processor, a special purpose processor, or a group processor) configured to execute one or more software or firmware programs, a memory, a merged logic circuit, and/or another appropriate component that supports the described function. In an optional example, a person skilled in the art may understand that the apparatus 1000 may be specifically the network device in the foregoing embodiments, and may be configured to perform procedures and/or steps corresponding to the network device in the foregoing method embodiments. To avoid repetition, details are not described herein again.

The apparatus 1000 in the foregoing solutions has a function of implementing a corresponding step performed by the device in the foregoing methods, or the apparatus 1000 in the foregoing solutions has a function of implementing a corresponding step performed by the network device in the foregoing methods. The function may be implemented by hardware, or may be implemented by executing corresponding software by hardware. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit such as the processing unit may be replaced with a processor, to respectively perform sending and receiving operations and processing-related operations in the foregoing method embodiments.

In addition, the transceiver unit 1010 may alternatively be a transceiver circuit (for example, the transceiver circuit may include a receiver circuit and a transmitter circuit), and the processing unit may be a processing circuit.

It should be noted that the apparatus in FIG. 1000 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 11 is a diagram of a communication architecture according to an embodiment of this application. The communication apparatus 1100 shown in FIG. 11 includes a processor 1110, a memory 1120, and a transceiver 1130. The processor 1110 is coupled to the memory 1120, and is configured to execute instructions stored in the memory 1120, to control the transceiver 1130 to send a signal and/or receive a signal.

It should be understood that the processor 1110 and the memory 1120 may be integrated into one processing apparatus, and the processor 1110 is configured to execute program code stored in the memory 1120 to implement the foregoing functions. During specific implementation, the memory 1120 may be combined into the processor 1110, or independent of the processor 1110. It should be understood that the processor 1110 may correspond to each processing unit in the foregoing communication apparatus, and the transceiver 1130 may correspond to each receiving unit and sending unit in the foregoing communication apparatus.

It should be further understood that the transceiver 1130 may include a receiver (or referred to as a receiver machine) and a transmitter (or referred to as a transmitter machine). The transceiver may further include an antenna. There may be one or more antennas. The transceiver may alternatively be a communication interface or an interface circuit.

Specifically, the communication apparatus 1100 may correspond to the terminal device in the method 400, 600, 800, or 900 according to embodiments of this application. The communication apparatus 1100 may include units in the method performed by the terminal device in the method 400, 600, 800, or 900. It should be understood that a specific process in which the units perform the foregoing corresponding steps is described in detail in the foregoing method embodiments. For brevity, details are not described herein again.

When the communication apparatus 1100 is a chip, the chip includes an interface unit and a processing unit. The interface unit may be an input/output circuit or a communication interface. The processing unit may be a processor, a microprocessor, or an integrated circuit integrated on the chip.

During implementation, the steps in the foregoing methods may be completed by using a hardware integrated logic circuit in the processor or instructions in a form of software. The steps in the methods disclosed with reference to embodiments of this application may be directly performed and completed by using a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. During implementation, the steps in the foregoing method embodiments may be completed by using a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by using a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

This application further provides a computer-readable medium storing a computer program. When the computer program is executed by a computer, a function in any one of the foregoing method embodiments is implemented.

This application further provides a computer program product. When the computer program product is executed by a computer, a function in any one of the foregoing method embodiments is implemented.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the term such as "example" or "for example" represents giving an example, an illustration, or a description. Any embodiment or design solution described as an "example" in this application should not be explained as being more preferred or having more advantages than another embodiment or design solution. Exactly, the term "example" is to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that sequence numbers of the foregoing processes do not mean an execution sequence in various embodiments of this application. The execution sequence of the processes should be determined based on functions and internal logic of the processes, and should not be construed as any limitation on implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship between associated objects and indicates that three relationships may exist. For example, A and/or B may represent the following three cases: Only A exists, both A and B exist, and only B exists.

The term "at least one of..." or "at least one type of..." in this specification represents all or any combination of listed items. For example, "at least one of A, B, and C" may represent the following six cases: Only A exists, Only B exists, Only C exists, both A and B exist, both B and C exist, and all A, B, and C exist. In this specification, "at least one" means one or more. "A plurality of" means two or more.

It should be understood that in embodiments of this application, the terms "include", "have", and their variants all mean "include but are not limited to", unless otherwise specifically emphasized in another manner.

It should be understood that in various embodiments of this application, first, second, and various numbers are merely for differentiation for ease of description, and are not for limiting the scope of embodiments of this application, for example, used to distinguish between different information.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments and descriptions of beneficial effects. Details are not described herein again.

In several embodiments provided in this application, it should be understood that the disclosed system, apparatus, and method may be implemented in other manners. For example, the described apparatus embodiments are merely examples. For example, unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, to be specific, may be located in one location, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps in the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for non-terrestrial network NTN communication, applied to a terminal apparatus, wherein the terminal apparatus is located in a first hyper cell, the first hyper cell is associated with a plurality of cells, the terminal apparatus is served by a first cell carried by a first satellite, the first cell comprises at least one of the plurality of cells, and the method comprises:

   receiving first information from the first satellite, wherein the first information comprises information for performing mobility management by the terminal apparatus; and
   determining, based on the first information, to perform mobility management within the first hyper cell, or to perform mobility management between the first hyper cell and a second hyper cell.

2. The method according to claim 1, wherein the first information comprises an indication identifier of a hyper cell, the indication identifier of the hyper cell is associated with at least one cell identifier list, and the cell identifier list comprises at least one cell identifier.

3. The method according to claim 1 or 2, wherein determining, based on the first information, to perform mobility management within the first hyper cell, or to perform mobility management between the first hyper cell and the second hyper cell comprises: determining, based on the first information and one or more of location information, speed information, time information, and signal quality information of the terminal apparatus, to perform mobility management within the first hyper cell, or to perform mobility management between the first hyper cell and the second hyper cell.

4. The method according to any one of claims 1 to 3, wherein the terminal apparatus is in an idle state or an inactive state; and when the indication identifier of the hyper cell is the same as an identifier of the first hyper cell, determining to perform mobility management within the first hyper cell comprises:

   performing reselection based on the cell identifier list to determine an identifier of a second cell, wherein the second cell comprises at least one of the plurality of cells associated with the first hyper cell; or
   when the indication identifier of the hyper cell is different from an identifier of the first hyper cell, the indication identifier of the hyper cell indicates the second hyper cell, and determining to perform mobility management between the first hyper cell and the second hyper cell comprises: initiating a registration request based on the indication identifier of the hyper cell, wherein the registration request is used to register with the second hyper cell; and performing reselection based on the cell identifier list to determine an identifier of a second cell, wherein the second cell comprises at least one of a plurality of cells associated with the second hyper cell.

5. The method according to any one of claims 1 to 3, wherein the terminal apparatus is in a connected state; and when the indication identifier of the hyper cell is the same as an identifier of the first hyper cell, determining to perform mobility management within the first hyper cell comprises:

   determining an identifier of a second cell based on the cell identifier list, and performing handover to the second cell, wherein the second cell comprises at least one of the plurality of cells associated with the first hyper cell; or
   when the indication identifier of the hyper cell is different from an identifier of the first hyper cell, the indication identifier of the hyper cell indicates the second hyper cell, and determining to perform mobility management between the first hyper cell and the second hyper cell comprises: performing handover to the second hyper cell based on the indication identifier of the hyper cell, determining an identifier of a second cell based on the cell identifier list, and performing handover to the second cell, wherein the second cell comprises at least one of a plurality of cells associated with the second hyper cell.

6. The method according to claim 4 or 5, wherein the method further comprises: when the indication identifier of the hyper cell is the same as the identifier of the first hyper cell, determining configuration information of the second cell.

7. The method according to claim 6, wherein determining the configuration information of the second cell comprises:

   activating the configuration information of the second cell, wherein the second cell is a cell carried by the first satellite; or
   receiving the configuration information that is of the second cell and that is sent by a second satellite, wherein the second cell is a cell carried by the second satellite.

8. The method according to claim 4 or 5, wherein the method further comprises: when the indication identifier of the hyper cell is different from the identifier of the first hyper cell, determining configuration information of the second hyper cell and configuration information of the second cell.

9. The method according to claim 8, wherein determining the configuration information of the second hyper cell and the configuration information of the second cell comprises:
determining the configuration information of the second hyper cell comprises:

activating the configuration information of the second hyper cell; or
receiving the configuration information that is of the second hyper cell and that is sent by a second hyper cell control entity, wherein the second hyper cell control entity is associated with the second hyper cell; and
determining the configuration information of the second cell comprises:

activating the configuration information of the second cell, wherein the second cell is a cell carried by the first satellite; or
receiving the configuration information that is of the second cell and that is sent by a second satellite, wherein the second cell is a cell carried by the second satellite.

10. The method according to any one of claims 1 to 9, wherein the configuration information of the second hyper cell comprises common radio resource control configuration information, and the configuration information of the second cell comprises specific radio resource control configuration information of the terminal apparatus.

11. A non-terrestrial network NTN communication method, applied to a first satellite, wherein the first satellite serves a first hyper cell, the first hyper cell is associated with a plurality of cells, a first cell carried by the first satellite serves a terminal apparatus located in the first hyper cell, the first cell comprises at least one of the plurality of cells, and the method comprises:

determining first information, wherein the first information comprises information for performing mobility management by the terminal apparatus; and
sending the first information to the terminal apparatus.

12. The method according to claim 11, wherein the first information comprises an indication identifier of a hyper cell, the indication identifier of the hyper cell is associated with at least one cell identifier list, and the cell identifier list comprises at least one cell identifier.

13. A non-terrestrial network NTN communication method, applied to a first hyper cell control entity, wherein the first hyper cell control entity corresponds to a first hyper cell, the first hyper cell is associated with a plurality of cells, a terminal apparatus is located in the first hyper cell, the terminal apparatus is served by a first cell carried by a first satellite, the first cell comprises at least one of the plurality of cells, and the method comprises:

determining configuration information of the first hyper cell; and
sending the configuration information of the first hyper cell to the terminal apparatus.

14. A system for non-terrestrial network NTN communication, comprising a first satellite and a first hyper cell control entity, wherein the first hyper cell control entity is associated with a first area, the first area corresponds to a first hyper cell, the first satellite serves the first hyper cell, a terminal apparatus is located in the first hyper cell, the first hyper cell is associated with a plurality of cells, the terminal apparatus is served by a first cell carried by the first satellite, and the first cell comprises at least one of the plurality of cells, wherein:

the first satellite is configured to send first information to the terminal apparatus, wherein the first information comprises information for performing mobility management by the terminal apparatus; and
the first hyper cell control entity is configured to send configuration information of the first hyper cell to the terminal apparatus.

15. The system according to claim 14, wherein the first information comprises an indication identifier of a hyper cell, the indication identifier of the hyper cell is associated with at least one cell identifier list, and the cell identifier list comprises at least one cell identifier.

16. The system according to claim 14 or 15, wherein the first satellite is further configured to send configuration information of a second cell to the terminal apparatus, wherein the second cell comprises a cell indicated by the at least one cell identifier in the cell identifier list, and the second cell is a cell carried by the first satellite.

17. The system according to claim 14 or 15, wherein the system further comprises a second satellite, wherein the second satellite is further configured to send configuration information of a second cell to the terminal apparatus, wherein the second cell comprises a cell indicated by the at least one cell identifier in the cell identifier list, and the second cell is a cell carried by the second satellite.

18. The system according to any one of claims 14 to 17, wherein the indication identifier of the hyper cell indicates a second hyper cell, the system further comprises a second hyper cell control entity, and the second hyper cell control entity is configured to send configuration information of the second hyper cell to the terminal apparatus.

19. The system according to any one of claims 14 to 18, wherein the configuration information of the second hyper cell comprises common radio resource control configuration information, and the configuration information of the second cell comprises specific radio resource control configuration information of the terminal apparatus.

20. A terminal apparatus for non-terrestrial network NTN communication, wherein the terminal apparatus is located in a first hyper cell, the first hyper cell is associated with a plurality of cells, the terminal apparatus is served by a first cell carried by a first satellite, the first cell comprises at least one of the plurality of cells, and the terminal apparatus comprises:

a transceiver unit, configured to receive first information from the first satellite, wherein the first information comprises information for performing mobility management by the terminal apparatus; and
a processing unit, configured to: determine, based on the first information, to perform mobility management within the first hyper cell, or to perform mobility management between the first hyper cell and a second hyper cell.

21. The terminal apparatus according to claim 20, wherein the first information comprises an indication identifier of a hyper cell, the indication identifier of the hyper cell is associated with at least one cell identifier list, and the cell identifier list comprises at least one cell identifier.

22. The terminal apparatus according to claim 20 or 21, wherein the processing unit is specifically configured to:

determine, based on the first information and one or more of location information, speed information, time information, and signal quality information of the terminal apparatus, to perform mobility management within the first hyper cell, or to perform mobility management between the first hyper cell and the second hyper cell.

23. The terminal apparatus according to any one of claims 20 to 22, wherein the terminal apparatus is in an idle state or an inactive state; and
when the indication identifier of the hyper cell is the same as an identifier of the first hyper cell, the processing unit is specifically configured to:

perform reselection based on the cell identifier list to determine an identifier of a second cell, wherein the second cell comprises at least one of the plurality of cells associated with the first hyper cell; or
when the indication identifier of the hyper cell is different from an identifier of the first hyper cell, the indication identifier of the hyper cell indicates the second hyper cell, and the processing unit is specifically configured to:
initiate a registration request based on the indication identifier of the hyper cell, wherein the registration request is used to register with the second hyper cell; and perform reselection based on the cell identifier list to determine an identifier of a second cell, wherein the second cell comprises at least one of a plurality of cells associated with the second hyper cell.

24. The terminal apparatus according to any one of claims 20 to 22, wherein the terminal apparatus is in a connected state; and
when the indication identifier of the hyper cell is the same as an identifier of the first hyper cell, the processing unit is specifically configured to:

determine an identifier of a second cell based on the cell identifier list, and perform handover to the second cell, wherein the second cell comprises at least one of a plurality of cells associated with the second hyper cell; or
when the indication identifier of the hyper cell is different from an identifier of the first hyper cell, the indication identifier of the hyper cell indicates the second hyper cell, and the processing unit is specifically configured to:
perform handover to the second hyper cell based on the indication identifier of the hyper cell, determine an identifier of a second cell based on the cell identifier list, and perform handover to the second cell, wherein the second cell comprises at least one of a plurality of cells associated with the second hyper cell.

25. The terminal apparatus according to claim 23 or 24, wherein the processing unit is further configured to:
when the indication identifier of the hyper cell is the same as the identifier of the first hyper cell, determine configuration information of the second cell.

26. The terminal apparatus according to claim 25, wherein the processing unit is specifically configured to activate the configuration information of the second cell, wherein the second cell is a cell carried by the first satellite; or the processing unit is specifically configured to receive the configuration information that is of the second cell and that is sent by a second satellite, wherein the second cell is a cell carried by the second satellite.

27. The terminal apparatus according to claim 23 or 24, wherein the processing unit is further configured to: when the indication identifier of the hyper cell is different from the identifier of the first hyper cell, determine configuration information of the second hyper cell and configuration information of the second cell.

28. The terminal apparatus according to claim 27, wherein the processing unit is specifically configured to activate the configuration information of the second hyper cell; or the processing unit is specifically configured to receive the configuration information that is of the second hyper cell and that is sent by a second hyper cell control entity, wherein the second hyper cell control entity is associated with the second hyper cell; and
the processing unit is specifically configured to activate the configuration information of the second cell, wherein the second cell is a cell carried by the first satellite; or the processing unit is specifically configured to receive the configuration information that is of the second cell and that is sent by a second satellite, wherein the second cell is a cell carried by the second satellite.

29. The terminal apparatus according to any one of claims 20 to 28, wherein the configuration information of the second hyper cell comprises common radio resource control configuration information, and the configuration information of the second cell comprises specific radio resource control configuration information of the terminal apparatus.

30. A satellite apparatus for non-terrestrial network NTN communication, wherein the satellite apparatus serves a first hyper cell, the first hyper cell is associated with a plurality of cells, a first cell carried by the satellite apparatus serves a terminal apparatus located in the first hyper cell, the first cell comprises at least one of the plurality of cells, and the satellite apparatus comprises:

   a processing unit, configured to determine first information, wherein the first information comprises information for performing mobility management by the terminal apparatus; and
   a transceiver unit, configured to send the first information to the terminal apparatus.

31. The satellite apparatus according to claim 30, wherein
the first information comprises an indication identifier of a hyper cell, the indication identifier of the hyper cell is associated with at least one cell identifier list, and the cell identifier list comprises at least one cell identifier.

32. A first hyper cell control entity apparatus for non-terrestrial network NTN communication, wherein the first hyper cell control entity apparatus corresponds to a first hyper cell, the first hyper cell is associated with a plurality of cells, a terminal apparatus is located in the first hyper cell, the terminal apparatus is served by a first cell carried by a first satellite, the first cell comprises at least one of the plurality of cells, and the first hyper cell control entity apparatus comprises:

   a processing unit, configured to determine configuration information of the first hyper cell; and
   a transceiver unit, configured to send the configuration information of the first hyper cell to the terminal apparatus.

33. A communication apparatus, wherein the communication apparatus is configured to perform the method according to any one of claims 1 to 13.

34. A communication apparatus, comprising:
a processor, configured to execute a computer program stored in a memory, to enable the apparatus to perform the method according to any one of claims 1 to 13.

35. The apparatus according to claim 34, wherein the apparatus further comprises the memory.

36. A computer-readable storage medium, wherein the computer-readable storage medium stores a computer program; and when the computer program runs on a computer, the computer is enabled to perform the method according to any one of claims 1 to 13.

37. A computer program product, wherein the computer program product comprises instructions for performing the method according to any one of claims 1 to 13.

38. A chip system, comprising a processor, configured to invoke a computer program from a memory and run the computer program, to enable a communication device on which the chip system is installed to perform the method according to any one of claims 1 to 13.

FIG. 1

FIG. 2

FIG. 3

S410: A terminal device receives first information from a first satellite, where the first information includes information for performing mobility management by the terminal device

S420: The terminal device determines, based on the first information, to perform mobility management within a first hyper cell, or to perform mobility management between the first hyper cell and a second hyper cell

FIG. 4

EP 4 727 196 A1

| Terminal device | Satellite | NTN gateway | Hyper cell control entity |
|---|---|---|---|

NAS-SM

NAS-MM ———————————————————————— NAS-MM

RRC-P2 ———————————————————————— RRC-P2

RRC-P1 ———— RRC-P1

PDCP ———— PDCP

RLC ———— RLC

NAS-SM

N11

L2 —— L2

L1 —— L1

MAC —— MAC — Protocol layers of the SRI —— Protocol layers of the SRI

NR PHY —— NR PHY

FIG. 5

| UE | Access network device #1 | Access network device #2 | Hyper cell control entity #1 |

S601: Configuration information #1

S602: Configuration information #2

S603: Measurement report

S604: Handover request message

S605: Handover acknowledgement message

S606: Configuration information #3

S607: Context information of the UE

S608: Random access request message

S609: Random access response message

S610: Path request message

S611: Handover request acknowledgement message

S612: Indication message #1

S613: Configuration information #4

S614: Configuration completion acknowledgement message

FIG. 6

FIG. 7

EP 4 727 196 A1

| UE | Satellite #1 | Satellite #2 | Hyper cell control entity #1 |

UE in a connected state

← S810: Configuration information #1 —

← S820: Configuration information #2 —

— S830: Signal measurement result and/or location information →

— S840a: Configuration information #4 →

← S840b: Configuration information #3 —

— S850: RRC reconfiguration completion acknowledgement message →

S860a: Perform downlink synchronization before the UE receives a handover command

S860b: Obtain timing information (TA) of the target satellite based on a message like an ephemeris

S870: Trigger a CHO handover based on a measurement result

S880: Perform a procedure of accessing the satellite #2

S890: Complete LTM

FIG. 8

FIG. 9

Apparatus 1000

Transceiver unit 1010

Processing unit 1020

FIG. 10

Apparatus 1100

Processor
1110

Memory 1120

Transceiver
1130

FIG. 11

## INTERNATIONAL SEARCH REPORT

| International application No. |
| --- |
| **PCT/CN2023/112484** |

**A.     CLASSIFICATION OF SUBJECT MATTER**

H04W24/02(2009.01)i

According to International Patent Classification (IPC) or to both national classification and IPC

**B.     FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, ENTXTC, CNABS, WPABS, DWPI, IEEE, 3GPP: 超小区, 超级, 小区, 群, 组, 连续, 多个, 跟踪区, 更新, 卫星, 卫星小区, 切换, 重选, 移动性, 注册更新, HyperCell, NTN, cell, group, update, select, register, switch

**C.     DOCUMENTS CONSIDERED TO BE RELEVANT**

| Category* | Citation of document, with indication, where appropriate, of the relevant passages | Relevant to claim No. |
| --- | --- | --- |
| X | CN 112399496 A (DATANG MOBILE COMMUNICATIONS EQUIPMENT CO., LTD.) 23 February 2021 (2021-02-23) description, paragraphs [0037]-[0041] and [0106]-[0151], and figure 7 | 1-38 |
| A | CN 103428782 A (CHINA ACADEMY OF TELECOMMUNICATIONS TECHNOLOGY) 04 December 2013 (2013-12-04) entire document | 1-38 |
| A | CN 107205246 A (HUAWEI TECHNOLOGIES CO., LTD.) 26 September 2017 (2017-09-26) entire document | 1-38 |
| A | CN 116456415 A (HUAWEI TECHNOLOGIES CO., LTD.) 18 July 2023 (2023-07-18) entire document | 1-38 |
| A | WO 2022143563 A1 (HUAWEI TECHNOLOGIES CO., LTD.) 07 July 2022 (2022-07-07) entire document | 1-38 |
| A | WO 2023131320 A1 (HUAWEI TECHNOLOGIES CO., LTD.) 13 July 2023 (2023-07-13) entire document | 1-38 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 727 196 A1

**INTERNATIONAL SEARCH REPORT**
Information on patent family members

International application No.

**PCT/CN2023/112484**

| Patent document cited in search report | | | Publication date (day/month/year) | Patent family member(s) | | | Publication date (day/month/year) |
|---|---|---|---|---|---|---|---|
| CN | 112399496 | A | 23 February 2021 | None | | | |
| CN | 103428782 | A | 04 December 2013 | None | | | |
| CN | 107205246 | A | 26 September 2017 | WO | 2017157083 | A1 | 21 September 2017 |
| | | | | US | 2019014517 | A1 | 10 January 2019 |
| | | | | EP | 3410769 | A1 | 05 December 2018 |
| CN | 116456415 | A | 18 July 2023 | None | | | |
| WO | 2022143563 | A1 | 07 July 2022 | EP | 4250817 | A1 | 27 September 2023 |
| | | | | CN | 114698044 | A | 01 July 2022 |
| WO | 2023131320 | A1 | 13 July 2023 | None | | | |

Form PCT/ISA/210 (patent family annex) (July 2022)